# EUROPEAN PATENT SPECIFICATION

(11) **EP 3 796 620 B1**
(45) Date of publication and mention of the grant of the patent: **12.07.2023**
(21) Application number: 20206448.1
(22) Date of filing: 02.10.2019
(51) Int. Cl.: H04L 67/12, F24F 11/30, G01D 4/00, G01K 17/06

(54) **MONITORING OF HEAT CONSUMPTION**
ÜBERWACHUNG DES WÄRMEVERBRAUCHS
SURVEILLANCE D'UNE CONSOMMATION THERMIQUE

(30) Priority: 02.10.2018 DK PA201870650
(43) Date of publication of application: 24.03.2021
(62) Divisional of application: 19783424.5
(73) Proprietor: ista SE, 45131 Essen (DE)
(72) Inventor: Mathiesen, Benny Martin, 5500 Middelfart (DK); JUSTESEN, Peter Lindbjerg, 7430 Ikast (DK)
(74) Representative: Patentgruppen A/S

(56) References cited:
- EP-A1- 3 086 102
- US-A1- 2018 090 934

## Description

### Field of the invention

The present invention relates to monitoring of heat consumption in a plurality of submetered heat consumption arrangements, such as apartments.

### Background

Utilities such as space heating is essential to most residential, commercial, and industrial buildings. Heating may for example be distributed to a large number of buildings, such as apartment housings, by a district heating system, in which heat is generated in a centralized location and distributed to the buildings via a heating medium - typically heated water - through a piping network. Alternatively, the heating medium may be provided by the buildings themselves such as for example in an apartment housing where the heating is generated by an oil burner contained within the apartment housing. Irrespective of where the heating is generated, the heating medium may be transported through a series of pipes within the apartment housing and thereby supply the individual apartments with a heating medium usable for heating the apartments. Space heating of apartments may be done using a radiator through which the heating medium may run through.

With the increasing general recognition of several environmental and climate impacts and challenges related to heating, e.g. related to use of fossil fuels, and with increasing general wish of cost-optimizing also in private households, it is desirable to provide individual households, shops, companies, departments, etc., with their individual values of heat consumption. Such knowledge about a heating system can be used for increased and individual self-control, remote control, automatic control, etc. of the heating in the individual households. Further, such knowledge about a heating system can be used to detect irregularities, defects, fraud, etc. However, in order to effectively achieve these effects, the values for individual heat consumption has to be updated frequently, preferably each day or even more often, to effectively reflect a current state of the heating system.

Typically, the total energy consumption associated with heating such an apartment housing is monitored by the provider of the heating medium or the supplier of the fuel for heating the heating medium, such as a distributed heating supplier or a fuel oil supplier.

However, for housing estates such as apartment complexes consisting of a large group of households with a common heat supply, a total energy consumption for the entire complex received from a heat or fuel supplier is of no use for monitoring the individual heat consumption in the individual apartments or leases of the complex. One cannot assume that the total heat consumption of the building is distributed evenly between individual households, since individual households may have very different heat consumptions due to different sizes of the individual apartments of the housing estate and different heat consumption requirements of the individual tenants. The same challenges exist for commercial or industrial buildings with several individual leases or sections where individual heat consumption monitoring is desired.

To determine how the building's total energy consumption is distributed in individual heat consumption values among the individual apartments, a heat submetering system may be employed. The idea behind a heat submetering system is that a representation of heat consumption is monitored in all the individual households in such a way that each household's share of the total energy consumption of the housing estate can be calculated. However, in a submetering system, the individual household's representation of heat consumption does typically not provide an absolute heat consumption value by itself. For that, it has to be related the other households' representations of heat consumption and to the total heat consumption of the housing estate.

Prior art document EP3086102 discloses a method of operating a heating system including heating arrangements in several units of a building for detecting a representation of energy consumed in the building from the delivered fluid energy medium with a main meter.

Another prior art document US2018090934 discloses an energy baselining system that performs validation, estimation, and editing while being configured to employ one or more interval based energy consumption streams corresponding to a facility to develop and maintain weather-normalized baseline energy consumption data for the facility.

Fairly often, some of the devices providing the representation of heat consumption in the individual households are temporarily or permanently unavailable for reading and, as explained above, in a submetering system an unavailable reading affects the heat consumption calculation of all the households served by the common energy supply. With rare calculation of heat consumption there is normally time to wait for all the heat consumption values to be obtained. However, due to the above-mentioned desire for frequent updates of individual heat consumption, the common lack of a few heat consumption representations impedes the monitoring and frequent updates of individual heat consumption not only for the household with an unavailable device, but for all the neighbours, too.

### Summary of the invention

The inventors have identified the above-mentioned problems and challenges related to frequent monitoring and updating of individual heat consumption in submetered heat consumption arrangements, and subsequently made the below-described invention which provides several improvements and solutions in that regard.

An aspect of the invention relates to a method of monitoring heat consumption using a plurality of heat submetering devices distributed in a plurality of individual heat consumption arrangements supplied with a heating medium by a common heat supply, said plurality of heat submetering devices being communicatively associated with a meter reading system, the method comprising:
receiving in said meter reading system one or more measured meter readings at a first acquisition time, each of said one or more measured meter readings corresponding to a respective heat submetering device of a received devices group of said plurality of heat submetering devices;
transmitting one or more meter readings to a heat monitoring system at a first transmission time later than said first acquisition time, at least one of said meter readings comprising a representation of one of said one or more received measured meter readings;
calculating in said heat monitoring system in a first calculation step heat consumption values corresponding to one or more of said plurality of heat consumption arrangements for a monitoring period on the basis of an energy consumption derived from said common heat supply and meter readings corresponding to each of said plurality of heat submetering devices, said energy consumption and said meter readings being associated with said monitoring period, wherein said meter readings comprise estimated meter readings corresponding to heat submetering devices of a non-received devices group of said plurality of heat submetering devices and said at least one of said meter readings comprising said representation of one of said one or more measured meter readings transmitted at said first transmission time;
providing in said meter reading system at a second acquisition time after said first transmission time one or more meter readings corresponding to one or more heat submetering devices of said non-received devices group, said meter readings being associated with said monitoring period;
transmitting one or more updated meter readings to said heat monitoring system at a second transmission time later than said first transmission time, wherein each updated meter reading comprises one of said one or more meter readings provided in said meter reading system at said second acquisition time; and
re-calculating in said heat monitoring system in a second calculation step heat consumption values corresponding to one or more of said plurality of heat consumption arrangements for said monitoring period on the basis of said energy consumption and meter readings corresponding to each of said plurality of heat submetering devices, said meter readings being associated with said monitoring period, wherein said meter readings comprise at least said meter readings transmitted at said first transmission time and said updated meter readings transmitted at said second transmission time.

Thereby is provided an advantageous new way of managing meter readings and estimates under contemporary requirements for quick and frequent production of usable consumption values suitable for controlling and regulating heat consumption, as well as detecting irregularities, defects or fraud.

By the present invention, the time to making available the first calculations of consumption for a certain monitoring period can be significantly reduced, because arrangements are made to ensure that meter readings, measured or estimated, exist for all heat submetering devices early in the process at the first transmission time. However, when more measured meter readings for the same monitoring period turns up later, and/or improved estimates are available later, the present invention allows for re-calculation of the consumption to incorporate the later, but better, knowledge about the system state. An appropriate selection of the delay between the end of a monitoring period and the first transmission time related to that monitoring period, may consider a balancing between the desire to get consumption calculation results early, the expectations to the accuracy of the first calculations, as well as the amount of further transmissions and re-calculations that are acceptable.

Further, embodiments of the present invention improve the communication between a meter reading system and a heat monitoring system by setting up means for controlling the extent in volume and timeframe for sharing such better knowledge.

A heat consumption arrangement is understood as for example a housing unit, a real estate unit or an industrial unit with a belonging heat consumption. As an example, a building, e.g. an apartment housing, may comprise a plurality of individual heat consumption arrangements such as apartments, with all the heat consumption arrangements having individual heat consumptions. For an apartment housing, the individual apartments may have different heat consumptions, such that the total heat consumed by the apartment housing is not evenly distributed between the individual apartments. The heat consumption arrangements are a suitable way of dividing a total heat consumption of a building or complex of buildings into smaller units related to the purpose of the heat consumption monitoring. For instance, in the example of an apartment housing, each apartment has a tenant who need monitoring of their individual apartment's heat consumption in order to be able to act in case of irregularities, defects or excessive consumption in their individual apartment, and in the example of an industrial complex, the manager of each department, e.g. development, sales, manufacturing and warehouse, may need monitoring of their individual department's heat consumption for the same reasons.

The heat consumption arrangements, e.g. apartments, which are supplied from a common heat supply, e.g. the apartments of one building are typically supplied from a common central heater in the building or from a single district heating supply, have their total energy consumption measured by a main meter, operated by the utility company or building manager, or the like.

For individual heating, a heat consumption arrangement may comprise one or more heat consumption devices such as heat exchangers like radiators and convector radiators, supplied from the common heat supply. The heat consumption associated with the heat consumption devices may be monitored by a heat submetering device capable of measuring a representation of heat consumption of the heat consumption device. A heat submetering device is understood as a device configured to establish an absolute or relative measure of heat consumption. In this sense, a relative measure of heat consumption is a measure which on its own cannot be used to infer an absolute measure of heat, i.e. the relative measure can only be used to infer an absolute measure of heat in the context of other relative measurements of the other plurality of heat submetering devices associated with the common heat supply. A relative measure of heat consumption may be a number indicating a number of units of heat consumed such as for example 37 units of heat. This relative measure may be interpreted by comparing with other relative measures, established by all other of the plurality of heat submetering devices, in the light of the total energy consumption of all the heat consumption arrangements of the common heat supply.

The heat submetering devices associated with the one or more heat consumption arrangements may be communicatively associated with a meter reading system. By a meter reading system is understood a system arranged to receive measurements related to heat consumptions, such as measured meter readings established by heat submetering devices. The meter reading system may be decentralized with respect to the associated heat submetering devices, such that the system may communicate with multiple heat submetering devices of multiple heat consumption arrangements distributed in for example multiple different apartment housings, with different common heat supplies. The transmission of measured meter readings from the plurality of heat submetering devices to the meter reading system may be performed automatically. Having a meter reading system is advantageous in that measured meter readings from a plurality of heat submetering devices may be established automatically and the measured meter readings may be handled automatically such that manual handling of readings can be avoided to a large extent.

By a meter reading is understood an establishment of a representation related to the heat consumption of a heat consumption device at a given time or period. By establishment is meant that the meter reading may originate from a measured meter reading recorded by a heat submetering device, or the meter reading may originate from an estimated meter reading substituting a, possibly missing, measured meter reading. A meter reading may be a representation of an absolute or relative measurement of heat consumption measured by a heat submetering device, or an estimate thereof, and by a representation of a meter reading is understood that a meter reading may represent a processed measured meter reading or estimated meter reading.

An example of a processed measured meter reading or processed estimated meter reading is a measured meter reading or estimate which is corrected by one or more factors. Such factors may for example comprise a radiator capacity factor indicative of the ability of the associated heat consumption device, e.g. a radiator, of converting the input heat into radiant heat. The processing of measured meter readings may in various embodiments be conducted in the heat submetering devices, the meter reading system or the heat monitoring system.

A representation of a measured meter reading may also be the measured meter reading itself.

By a received devices group is understood a group of heat submetering devices from which measured meter readings are received in the meter reading system at the first acquisition time. For various reasons, measured meter readings for certain heat submetering devices may not be received in the meter reading system. For example, a heat submetering device may simply be out of order due to damage or a dead battery, whereby no measured meter readings are received from such a heat submetering device. The transmission of measured meter readings may for example be susceptible to transmission outages. As an example, a radio transmission using radio frequency signals may be obstructed by the presence of a metal or concrete object, such as a safe or cabinet located in front of the heat submetering device. Transmission outages may also arise due to interference with other radio signals, interference with electrical devices such as computers, fans, lighting fixtures or fans, and furthermore weather conditions may also have an impact on wireless signal integrity. For example, a lightning strike can cause electrical interference and fog may weaken signals as they pass through. Even wired connections between heat submetering devices and a meter reading system may be susceptible to transmission errors, due to interference with other electrical equipment, or due to broken or bad electrical connection. A meter reading that is not received in the meter reading system may also be due to the meter reading not being attempted transmitted by the heat submetering device, or the meter reading being lost along the way, for example when the meter reading is transmitted through intermediate network nodes such as other heat submetering devices used as relays, a concentrator, network switches and routers, access points, etc.

As seen, some of the reasons for a missing meter reading are clearly temporary and fixed by time going, by coincidence or by simple adjustments, possibly autonomously fixed by the devices or the system. Other reasons are permanent without replacement or repair of devices or infrastructure. Experiencing such transmission errors for a percentage of the heat submetering devices is quite normal, and therefore a distinction is made between heat submetering devices from which meter readings have been received at the first acquisition time, referred to as a heat submetering devices of a received devices group, and heat submetering devices from which meter readings have not been received at the first acquisition time, referred to as heat submetering devices of a non-received devices group.

By a heat consumption value is understood an absolute value of heat consumption corresponding to a heat consumption arrangement and/or absolute values of heat consumption corresponding to one or more heat consumption devices of a heat consumption arrangement. Calculating heat consumption values is advantageous in that it may provide means for tenants of a heat consumption arrangement to be informed about their own energy consumption and depending on the heat consumption values they may consider if their consumption of heat can be reduced. Providing heat consumption values is further advantageous by making it possible to detect irregularities, defects or fraud for the individual subdivisions, e.g. heat consumption arrangements such as apartments or departments, or even down to individual heat consumption devices, such as radiators.

Here is given an example of a calculation of heat consumption values in a submetering system. For sake of simplicity, assume that a group of heat consumption arrangements comprises for example three heat consumption devices, each heat consumption device being monitored by its associated heat submetering device. Over a period of time, the total heat consumption of the group of heat consumption arrangements is measured by a main meter of the common heat supply to be 1000 kWh. A first measured meter reading associated with a first heat submetering device may report a heat consumption of 37 units of heat, a second measured meter reading associated with a second heat submetering device may report a heat consumption of 30 units of heat, and a third measured meter reading associated with a third heat submetering device may report a heat consumption of 33 units of heat. In this example, as the total sum of units of heat is 100, the first measured meter reading amounts to 37 percent of the total heat consumption, i.e. a heat consumption value of 370 kWh, the second measured meter reading leads to a heat consumption value of 300 kWh, and the third measured meter reading leads to a heat consumption value of 330 kWh. From this example, it is evident that a missing measured meter reading, such as for example the second measured meter reading would corrupt the calculation for all the heat consumption arrangements supplied by the common heat supply, for example resulting in the first measured meter reading amounting to more than 50 percent of the total heat consumption instead, and the calculated heat consumption values would therefore not reflect actual heat consumptions. If a meter reading, corresponding to a heat submetering device and comprising a measured meter reading, is not received in the heat monitoring system, an estimate must be used in place of this measured meter reading in order to ensure that as correct calculation as possible of heat consumption values for the heat consumption arrangements may be performed. In this context, such an estimate is referred to as an estimated meter reading. The estimated meter reading has the role of a substitute of a measured meter reading such that a calculation of heat consumption values can be carried out even in the absence of a measured meter reading. Again, the estimation of a single meter reading affects the calculation of all heat consumption devices, also the ones from which measured meter readings were received.

A calculation of heat consumption values is carried out on the basis of meter readings corresponding to all of the plurality of heat submetering devices associated with the common heat supply, and an individual meter reading corresponding to a heat submetering device may comprise a representation of a measured meter reading or an estimated meter reading depending on whether a measured meter reading for that heat submetering device is received in the heat monitoring system at the first transmission time or not. From the above, it is seen that estimated meter readings correspond to the non-received devices group.

The calculation of heat consumption values is carried out on the basis of an energy consumption derived from the common heat supply associated with the plurality of heat consumption arrangements. In this context, the term energy consumption may be understood as a total heat consumption associated with the plurality of heat consumption arrangements. Even if the heat submetering devices are measuring absolute heat consumption of the heat consumption devices, e.g. radiators, the energy consumption may, for one or more reasons, not coincide with the sum of these absolute meter readings of the plurality of heat consumption arrangements. As an example, an apartment housing is susceptible to heat losses in the piping between the heat supply and the individual heat consumption arrangements, and the apartment housing may comprise common spacing, such as a cellar room shared by the tenants, which require heating as well. Therefore, the energy consumption derived from the common heat supply may exceed the sum of absolute meter readings of the plurality of heat consumption arrangements. As a result, the calculated heat consumption value of an individual heat consumption arrangement may exceed the absolute meter readings of that heat consumption arrangement. This effect is intrinsic for submetered heating systems and means, that for the monitoring of energy consumption all energy consumption from the common heat supply is distributed between the heat consumption arrangements.

By the term "derived" is understood that the energy consumption may not be directly inferred from the common heat supply. This could for example be the case for an apartment housing where the heat supply is an oil burner, and the total energy consumption is derived from a total amount of oil used for heating the heating medium. In the case of district heating, where the heating medium is heated remotely to the heat consumption arrangements, the energy consumption may be derived from a main meter associated with the common heat supply. Such a main meter may for example be positioned at a heating medium inlet of the apartment housing, and thus any measured meter reading obtained from the main meter is a direct representation of the total energy consumption of the apartment housing.

In an embodiment the energy consumption may be estimated from a history of main meter readings associated with the main meter, for example if a main meter reading is not available for a specific monitoring period. Such an estimation may at least partly be based on an extrapolation or an interpolation of main meter readings.

Following the above discussion, it is conceivable that the calculation of heat consumption values carried out in the first calculation step may comprise a calculation based partly on estimates, and therefore the obtained heat consumption values may represent approximations of actual heat consumptions of the heat consumption arrangements.

Monitoring period is the time resolution of the monitoring of heat consumption. By a monitoring period is understood the divisions of time for which heat consumption values are calculated for the heat consumption arrangements. The monitoring period may have a duration of no longer than a month, such as no longer than a week, for example no longer than a day, such as no longer than an hour, for example no longer than a minute, or less. A monitoring period of an hour, means that the heat monitoring system calculates heat consumption values for every hour, and an operator, tenant, a machine or another user is thereby able to 'zoom in' and monitor the heat consumption on an hourly basis. Reducing the monitoring period to for example one second, increases the monitoring resolution considerably, and allows one to follow the heat consumption second by second. On the other hand, prolonging the monitoring period to for example three months or more, drastically reduces the usability of the system as the above-mentioned effects of using the generated heat consumption information for control and regulation and as a state of the system for discovery of defects, irregularities or fraud, etc., becomes very difficult without frequent updates.

As an example, the monitoring period may be any number of for example weeks, days, hours or minutes. During this monitoring period one or more of the plurality of heat submetering devices may establish measured meter readings and depending on the specific heat submetering device this establishment may occur with a specific frequency. Crucial to the monitoring period is that a set of measured meter readings corresponding to all heat submetering devices is attempted being established during this period of time. In the case of a malfunctioning heat submetering device, such as a heat submetering device not powered by electricity, the corresponding meter reading can clearly not be established, and therefore the set of measured meter readings obtained during the monitoring period may not represent a complete set of measured meter readings of the plurality of heat submetering devices.

Meter readings and energy consumption being associated with a certain monitoring period is referring to the meter readings and energy consumption that are used to calculate the heat consumption for that monitoring period. In theory, these meter readings may be measured just at the end of the monitoring period to give an ideal calculation of consumption during the monitoring period. In practice, the measuring at the various heat submetering devices is often deliberately, by coincidence or by lack of synchronization means, not synchronized in time with each other and/or not synchronized in time with the measuring periods considered by the heat monitoring system. Hence, for the calculation of consumption for a certain monitoring period the heat monitoring system often have to use meter readings and energy consumption which is not perfectly synchronized with the end of the monitoring period but may consider it an insignificant error or may compensate for the error by various averaging or interpolation techniques. Anyway, the meter readings and energy consumption used for calculation of consumption for a certain monitoring period, synchronized or not, are referred to as associated with that certain monitoring period.

By a heat monitoring system is understood a system which is configured to monitor heat consumption values of the plurality of heat consumption arrangements. Such a monitoring may comprise monitoring a total heat consumption value of the plurality of heat consumption arrangements, monitoring a total heat consumption value of a subset of the plurality of heat consumption arrangements, monitoring a total heat consumption value of an individual heat consumption arrangement comprising one or more heat consumption devices, and monitoring heat consumption of an individual heat consumption device associated with its own heat submetering device. By monitoring is understood that a heat consumption associated with one or more heat submetering devices is kept track of over time. As an example, the heat monitoring system may keep track of the evolution of heat consumption values of individual heat consumption arrangements over time. The monitoring expresses a state of a physical system, usable for detection of irregularities, defects or fraud, or for control and regulation automatically or manually by the individual heat consumption device operators, such as the individual tenants of apartments in an apartment building.

As an example, users of the heat monitoring system may keep track of the evolution of heat consumption values over time through an interface of the heat monitoring system. Such an interface may comprise a visualization of heat consumption values of individual heat consumption arrangements. Examples of visualization may include substantially real-time visualization of heat consumption values, such that the visualization always reflects the most recent heat consumption values based on the meter readings received in the heat monitoring system. The visualization of heat consumption values may for example comprise a visualization of heat consumption values in units of kWh.

The monitoring may in various embodiments comprise comparison of heat consumption values between heat consumption devices or heat consumption arrangements, or comparison of previous and current heat consumption values. Such comparisons may also be visualized to put a state of the heating system into perspective for increased usability in detection of irregularities, defects or fraud, or for control and regulation of heat consumption.

In an embodiment the heat monitoring system may be accessed externally from e.g. a person associated with a heat consumption arrangement, such as a tenant of an apartment. Being able to access the heat monitoring system externally is advantageous in that it allows one or more persons associated with a heat consumption of a heat consumption arrangement to monitor their own heat consumption. Gaining access into one's own energy consumption is advantageous in that patterns of inappropriate heat consumption may be detected and responded to accordingly. By changing heat consumption patterns, a reduction of heat consumption may be achieved, which may result in a less negative climate impact, through a lesser need of generating heat by the heat supplier.

The heat monitoring system is configured to calculate heat consumption values of the one or more heat consumption arrangements on the basis of meter readings. By the term heat consumption values is understood a value referring to a level of heat consumption associated with a heat consumption arrangement and/or heat consumptions associated with one or more individual heat consumption devices of that heat consumption arrangement.

A measured meter reading that is not received in the meter reading system at the first acquisition time may be received at a later second acquisition time, e.g. in case of temporary communication problems between the heat submetering device and the meter reading system as described above. If for example a measured meter reading is corrupted after being dispatched from a heat submetering device, that measured meter reading may not necessarily be lost, since a later dispatch of measured meter readings may include a previous history of several measured meter readings, one of which being the very measured meter reading previously corrupted in the communication. In another example, the heat submetering device may queue readings until a reliable communication is established, and then transmit some or all readings made since the last successful communication.

By an updated meter reading is understood a meter reading that updates a meter reading already present in the heat monitoring system. With new and updated meter readings in the heat monitoring system, a new calculation of heat consumption values is necessary, since heat consumption values of one heat consumption arrangement depends on meter readings of that heat consumption arrangement as well as all the others of the common heat supply. Thus, any change in meter readings associated with one heat submetering device of a heat consumption arrangement may affect the heat consumption values of other heat consumption arrangements.

In an embodiment, each of the one or more meter readings transmitted at the first transmission time and each of the one or more updated meter readings transmitted at the second transmission time may comprise metadata associated with a heat submetering device. Such metadata may comprise a heat submetering device identifier which is an identifier uniquely associated with a particular heat submetering device. Other types of metadata may comprise a type of a heat submetering device, a type of the associated heat consumption device, and a producer and a model of the heat submetering device and/or the associated heat consumption device.

In an embodiment said meter reading system comprises an acquisition system arranged to establish said communicative association between said plurality of heat submetering devices and said meter reading system.

By an acquisition system is understood a system capable of facilitating a communicative connection between the plurality of heat submetering devices and the meter reading system. The connection may be arranged to transmit measured meter readings from the heat submetering devices to the meter reading system.

In an embodiment said acquisition system is based on wireless communication such as radio communication.

The communication facilitated by the acquisition system may be based on various network technologies such as for example TCP/IP protocols such as IPv4, IPv6, various personal area networks PAN, e.g. Bluetooth or ZigBee, wireless network technologies under the WiFi label, i.e. based on IEEE 802.11 specifications, various Low-Power Wide-Area Network LPWAN technologies, e.g. NarrowBand IoT NB-IOT, LoRa-based technologies, various machine type communications, e.g. based on classical telecommunication networks such as LTE, GPRS, 3G, 4G, 5G, or LTE advanced for machine type communication LTE-MTC, etc., or other wired or wireless platforms.

In an embodiment said step of receiving in said meter reading system one or more measured meter readings at said first acquisition time is performed via said acquisition system.

In an embodiment said meter reading system comprises an auxiliary input interface arranged to receive auxiliary meter readings.

By auxiliary meter readings are understood meter readings that are not received in the meter reading system via the acquisition system. Having an auxiliary input interface is advantageous in that the meter reading system may be able to acquire more meter readings, for example from different sources, than if the system only had an acquisition system.

In an embodiment the auxiliary input interface of the meter reading system is arranged to receive auxiliary meter readings comprising measured meter readings and/or estimated meter readings. The auxiliary meter readings may for example be transmitted from the heat monitoring system or an external system other than the meter reading system and the heat monitoring system, for example a separate system for producing estimated meter readings to substitute missing meter readings from the non-received devices group of heat submetering devices, or a separate system providing measured meter readings from a meter reading acquisition system incompatible with the acquisition system of the meter reading system.

In an embodiment the auxiliary input interface of the meter reading system is further arranged to receive updated estimated meter readings. It may for example be advantageous that the meter reading system can receive updated estimated meter readings from the heat monitoring system or a separate system, when the heat monitoring system or separate system for some reason has changed a previously estimated meter reading.

In an embodiment the auxiliary input interface of the meter reading system is arranged to receive other types of data, such as a request prompting an update of a meter reading within the meter reading system. Other types of data may include factors, such as a reduction number and a capacity factor, used for processing of measured meter readings. The processing of measured meter readings may in this context be performed by the meter reading system. Other types of data may include reports of errors related to transmitted meter readings and/or updated meter readings. The other types of data may be transmitted via an auxiliary output interface of the heat monitoring system.

In an embodiment said meter readings and/or updated meter readings transmitted to said heat monitoring system are transmitted from said meter reading system.

In an embodiment said steps of transmitting said meter readings and/or said updated meter readings are performed by the meter reading system transmitting requests to a service exposed by said heat monitoring system.

Any communication technology may be used between the meter reading system and the heat monitoring system. An advantageous embodiment uses web service technologies or similar to establish the connection, for example and preferably via the public Internet. The heat monitoring system may for example expose its service as a web service, for example by means of Web Service Description Language WSDL or other web service schemes, for example a Representational State Transfer REST-compliant web service, and the meter reading system may format its requests, i.e. data transmission, by eXtended Markup Language XML, Simple Object Access Protocol SOAP, JavaScript Object Notation JSON, etc. The communication is preferably secured by encryption of the communication link, e.g. by transport layer security TLS, i.e. HTTPS, or suitable alternatives, or by encryption of the data themselves, e.g. encrypted XML or secure SOAP.

In an embodiment, the roles are switched so that the meter reading system exposes a service accessible for the heat monitoring system, and the heat monitoring system is thereby enabled to request transmission of meter readings from the meter reading system. This embodiment may generally be implemented in connection with any of the other embodiments described herein.

In an embodiment said meter reading system and said heat monitoring system are implemented in respective server computers.

One advantage of implementing the meter reading system and the heat monitoring system in respective server computers is that meter readings and updated meter readings may be stored in two independent server computers. This adds a level of data security, since any loss of data on one server computer may be restored by the data stored on the other server computer, as embodiments of the present invention further provides means for keeping the data on the two servers synchronized. Also with respect to maintenance, security, dependencies, freedom of technologies and upgrades, etc., the distribution of the two systems onto separate server computers is advantageous. Preferably, the separate systems are located at separate locations and have individual operators.

In an embodiment said steps of transmitting said meter readings and/or said updated meter readings are performed via an output interface of said meter reading system communicatively coupled to said heat monitoring system.

Any communication technology may be used between the meter reading system and the heat monitoring system. Preferably the public Internet is used for the communicative coupling between the systems, and the output interface may preferably comprise a wired or wireless network connection and e.g. appropriate transport layer implementations and possibly web service client implementations for the agreed communication technology.

In an embodiment said measured meter readings received in said meter reading system at said first acquisition time and said meter readings provided in said meter reading system at said second acquisition time are stored in a memory associated with said meter reading system.

Storing said received meter readings in one or more databases associated with said meter reading system is advantageous in that meter readings may be sent again to said heat monitoring system in case of the meter reading being lost in the transmission to the heat monitoring system, or if the heat monitoring system loses the meter reading which is necessary to perform calculations of heat consumptions. The storing of received meter readings also makes it possible for the meter reading system to estimate meter readings associated with the non-received devices group based on previous meter readings.

In an embodiment said steps of transmitting said meter readings and/or said updated meter readings are performed via an input interface of said heat monitoring system communicatively coupled to said meter reading system.

Any communication technology may be used between the meter reading system and the heat monitoring system. Preferably the public Internet is used for the communicative coupling between the systems, and the input interface may preferably comprise a wired or wireless network connection and e.g. appropriate transport layer implementations and possibly web service server implementations for the agreed communication technology.

In an embodiment said heat monitoring system comprises an auxiliary output interface arranged to transmit auxiliary meter readings.

In an embodiment the auxiliary output interface of the heat monitoring system may be arranged to transmit other types of data, such as a request prompting an update of a meter reading within the meter reading system.

In an embodiment said meter readings transmitted to said heat monitoring system at said first transmission time and said updated meter readings transmitted to said heat monitoring system at said second transmission time are stored in a memory associated with said heat monitoring system.

Storing said transmitted meter readings in one or more databases associated with said monitoring system is advantageous in that estimates may be stored and subsequently be replaced by updated estimates or actual meter readings. A further advantage is that users of said monitoring system may access a history of previous meter readings and/or heat consumptions. Thereby, a user of said monitoring system may for example access the development of heat consumption over time. The storing of transmitted meter readings also makes it possible for the heat monitoring system to estimate meter readings associated with the non-received devices group based on previous meter readings.

In an embodiment said method comprises a step of providing said calculated heat consumption values for monitoring of heat consumption in one or more of said plurality of heat consumption arrangements.

The calculated heat consumption values may advantageously be provided in the corresponding heat consumption arrangements, e.g. apartments, for the benefit of the users of the heat consumption arrangement in control and regulation of their heat consumption, and/or detection of irregularities, defects or fraud. The heat consumption values may for example be provided in a heat consumption arrangement by means of a display mounted in the heat consumption arrangement, or by means of a device such as a computer, tablet computer or smartphone within the heat consumption arrangement which may access the heat consumption values, for example through an app or a website.

In an embodiment said method comprises a step of providing said re-calculated heat consumption values for monitoring of heat consumption in one or more of said plurality of heat consumption arrangements.

Providing also the re-calculated consumption values is advantageous, i.e. updating the previously provided information, for example by any of the means described above.

In an embodiment said steps of providing said calculated and/or re-calculated heat consumption values are performed via a consumption value output interface for providing said heat consumption values to a display.

The display may be a display of the heat consumption system, the heat consumption arrangement, or at an external system, e.g. a building manager where monitoring of heat consumption may facilitate detection of faults, etc.

In an embodiment a visualization of said heat consumption values is provided via said consumption value output interface.

Visualization of heat consumption values of individual heat consumption arrangements or heat consumption devices may include substantially real-time visualization of heat consumption values, such that the visualization always reflects the most recent heat consumption values based on the meter readings received in the heat monitoring system. The visualization of heat consumption values may for example comprise a visualization of heat consumption values in units of kWh. The visualization may in various embodiments comprise comparison of heat consumption values between heat consumption devices or heat consumption arrangements, or comparison of previous and current heat consumption values. Such comparisons may also be visualized to put a state of the heating system into perspective for increased usability in detection of irregularities, defects or fraud, or for control and regulation of heat consumption.

In an embodiment said measured meter readings received in said meter reading system at said first acquisition time comprise reading times being associated with said monitoring period.

By a reading time is understood a time of which the measured meter reading is established by its corresponding heat submetering device. The reading time may be a timestamp of when the heat submetering device has performed the measurement. The reading time may be used to associate a measured meter reading with the monitoring period. By association is understood that the measured meter reading is used for calculations of heat consumption values corresponding to the monitoring period. The reading time may be associated with the monitoring period by being substantially at the end of the monitoring period, or within a predefined acceptable range before and/or after the end of the monitoring period, or simply be associated with the nearest end of a monitoring period. If more measured meter readings are generated for each monitoring period, the one closest to the end of the monitoring period is preferably associated with the monitoring period, or the several measured meter readings are used for interpolation of meter reading to generate an estimated meter reading with a reading time at the end of the monitoring period.

In an embodiment said estimated meter readings comprise a reading time being associated with said monitoring period.

In the case of an estimated meter reading, the reading time defines the time at which the corresponding heat submetering device is supposed to have had the value of the estimated meter reading substituting a missing measured meter reading from that device. As an example, a measure meter reading is missing from a heat submetering device of the non-received devices group, and if the expected reading time of the missing measurement is 12:05, an estimate may be generated to substitute this reading, and the estimated meter reading may then get a reading time of 12:05. Alternatively, in the generation of an estimated meter reading to substitute a missing measured meter reading, a reading time for which the estimate is generated may be selected freely by the estimation circuit, for example at a time where a most accurate estimate can be made based on the data available for estimation, or be selected as the end of the associated monitoring period.

In an embodiment said estimated meter readings are established by said meter reading system.

Producing the estimated meter readings in the meter reading system and transmitting these at the first transmission time is advantageous in that a complete set of meter readings may be transmitted at once, i.e. meter readings pertaining to both the received devices group and the non-received devices group of the plurality of heat submetering devices, thereby providing all the readings necessary for the calculation step of the heat monitoring system. Further, the meter reading system may have access to a huge base of meter readings and other data, for example from many geographical locations, and/or from a long time back, thereby being able to produce good estimates using for example big data techniques.

In an embodiment said estimated meter readings are established by one or more of the plurality of heat submetering devices.

Although, a heat submetering device is communicatively coupled to the meter reading system, the heat submetering device may not be able to record measured meter readings, and therefore instead generate and pass on an estimated meter reading to the meter reading system. The estimated meter reading may therefore be produced in the heat submetering device and received in the meter reading system by the same route as measured meter readings, for example by said acquisition system.

In an embodiment said estimated meter readings used for said first calculation step are transmitted to said monitoring system from said meter reading system as one or more of said meter readings at said first transmission time.

The meter readings transmitted at the first transmission time may advantageously include both representations of measured meter readings for heat submetering devices of the received devices group, as well as estimated meter readings for heat submetering devices of the non-received devices group.

In an embodiment said estimated meter readings used for said first calculation step are established by said heat monitoring system.

When having received the meter readings from the meter reading system, the heat monitoring system may generate estimated meter readings to substitute any missing meter readings in the transmission from the meter reading system.

In an embodiment said method comprises establishing estimated meter readings corresponding to all heat submetering devices of said non-received devices group of said plurality of heat submetering devices.

As explained above, all heat submetering devices with a common heat supply, whether from the received or non-received devices group, should eventually have a corresponding meter reading, measured or estimated, in order to calculate the heat consumption values for the individual heat consumption arrangements because the heating system is a submetered system and all calculations depend on all meter readings. Hence, estimated meter readings are generated corresponding to all devices in the non-received devices group.

In an embodiment said one or more meter readings transmitted at said first transmission time comprise meter readings corresponding to all of said plurality of heat submetering devices.

By all of said plurality of heat submetering devices is understood all the heat submetering devices associated with both the received devices group and the non-received devices group of heat submetering devices, of heat consumption arrangements sharing the common heat supply.

In an embodiment said one or more meter readings provided in said meter reading system at said second acquisition time comprise reading times being associated with said monitoring period.

The second acquisition time relates to the same monitoring period as the first acquisition time. In other words, if new meter readings are received, which belong to a later monitoring period, they would be associated with a first acquisition time of that later monitoring period. Hence, the reading times of meter readings received at the second acquisition time should preferably also be associated with the same monitoring period, as the reading times of the meter readings received at the first acquisition time is associated with.

In an embodiment said one or more meter readings provided in said meter reading system at said second acquisition time comprise measured meter readings.

Receiving measured meter readings at a second acquisition time in the meter reading system is advantageous since these measured meter readings represent readings that were not received in the meter reading system at the first acquisition time, i.e. these readings represent readings from the non-received devices group, for which estimated meter readings have probably already been generated and used for calculation. Being able to utilize these actual measured meter readings, that were initially not available to the meter reading system is advantageous since a subsequent calculation of heat consumption values using the measured values that have turned up instead of the estimated substitutes may better reflect actual levels of heat consumption, and thereby increase the usability of the monitoring.

In an embodiment said one or more meter readings provided in said meter reading system at said second acquisition time comprises updated estimated meter readings.

By the term updated estimated meter readings is understood a new estimate of a meter reading which is intended to replace a previously used estimated meter reading corresponding to the same heat submetering device of the non-received devices group. The update of an estimate may for example be relevant if better data for estimation becomes available, for example if measured values turns up which changes other previously estimated meter readings and suggest that other estimates should be re-estimated. In another example, the first estimated meter readings provided at the first transmission time may be less reliable estimates due to a requirement of short monitoring periods and thereby short time frames to deliver meter readings for all heat submetering devices, whereas a more time consuming estimation or a semiautomatic evaluation of the first, quick estimates, may produce more reliable estimated meter readings and thereby lead to updating the estimated meter readings with updated estimated meter readings.

In an embodiment said re-calculation in said second calculation step is further based on updated estimated meter readings having reading times being associated with said monitoring period.

Said updated estimated meter readings comprise reading times, each reading time referring to a time of which an updated estimated meter reading is an estimate for.

The meter readings and updated meter readings may be associated with the monitoring period in several ways. Meter readings and/or updated meter readings may have reading times that are contained within the time period defined by the monitoring period, such as for example in the middle of the monitoring period or at the ends of the monitoring period. If for example a first meter reading has a reading time which is within the associated monitoring period, a calculation of heat consumption values corresponding to the monitoring period may be based on a comparison of the first meter reading and a second meter reading corresponding to the same heat submetering device and corresponding to a previous monitoring period. Such a comparison may involve an assessment of how much the meter reading have changed from one monitoring period to the next. If the first and second measured meter readings are located at the ends of their respective monitoring periods, such a comparison may yield an accurate assessment of how much the meter reading have changed over the latest monitoring period.

If a heat submetering device restarts its associated measured meter reading at the beginning of a monitoring period, a measured meter reading, comprising a reading time being in the opposite end of the monitoring period, may reflect only the heat consumption of that monitoring period.

A meter reading having a reading time may also be associated with a monitoring period even if the reading time is outside the time period defined by the monitoring period, i.e. heat consumption values associated with a monitoring period may be calculated on the basis of assessments of a difference between two meter readings having reading times before the beginning and after the end of the monitoring period respectively.

In an embodiment said monitoring period is a common monitoring period for all of said plurality of heat submetering devices.

As all the meter readings are used together in the calculation of each heat consumption value, the monitoring period is preferably common to all the heat submetering devices.

In an embodiment said step of providing in said meter reading system at said second acquisition time one or more meter readings, is performed via said acquisition system and said meter readings comprise measured meter readings.

If a heat submetering device of the non-received devices group for a certain monitoring period suddenly gets connected again and has stored the measured meter reading associated with that monitoring period, it may advantageously transmit the measured meter reading whenever possible so that it can be used in a transmission of updated meter readings. The time at which the meter reading system receives the somewhat old measured meter reading pertaining to a monitoring period for which meter readings have already been transmitted to the heat monitoring system, is called the second acquisition time.

In an embodiment said step of providing in said meter reading system at said second acquisition time one or more meter readings, is performed by said meter reading system and said meter readings comprise updated estimated meter readings.

Producing the updated meter reading estimates within the meter reading system itself is advantageous since the meter reading system is the system which receives measured meter readings from the non-received devices group of the plurality of heat submetering devices at the second acquisition time. When such a measured meter reading is received in the meter reading system it follows that a re-calculation of heat consumption values may be needed since a previous calculation may have been based on an estimate for that very reading which rendered the previously calculated heat consumption values approximations of actual levels of heat consumption. Since the meter reading system is preferably the system receiving any late arriving measured meter readings it is the system which may be able to first decide whether updates of estimated meter readings are necessary. Such an update may comprise an update of a previously transmitted estimated meter reading by an updated estimated meter reading. Also in the above-described examples of the meter reading system making use of quick and slower estimation algorithms, an updated estimated meter reading may be provided by the meter reading system in the meter reading system to substitute a previously transmitted estimated meter reading.

In an embodiment said step of providing in said meter reading system at said second acquisition time one or more meter readings is performed via said auxiliary input interface and said meter readings comprise auxiliary meter readings.

The meter readings provided at the second acquisition time may be received from the heat monitoring system or an external system via the auxiliary input interface. An external system may for example be a separate estimation system or an alternative meter reading acquisition system not compatible with the acquisition system of the meter reading system. The auxiliary meter readings may be measured meter readings or estimated meter readings acquired or generated outside the meter reading system. For example, the heat monitoring system or external system may generate or receive an estimated meter reading, e.g. a manual meter reading from a monitoring operator or tenant, or an estimate adjusted in accordance with other information or agreements not available to the meter reading system, and transmit it to the meter reading system for future reference and storage as an auxiliary meter reading. The received auxiliary meter reading may cause other previous estimates to be updated.

In an alternative embodiment, the method does not comprise a step of transmitting updated meter readings at the second transmission time, but instead all updated meter readings are generated in the heat monitoring system or an external system and provided in the meter reading system via the auxiliary input interface. The received auxiliary meter readings may be used as basis for future estimated meter readings. This embodiment may be combined with any of the features describe herein except the features related to the transmission at the second transmission time.

In an embodiment said auxiliary meter readings comprise measured meter readings.

Measured meter readings received as auxiliary meter readings may for example come from an external meter reading acquisition system or be manual meter readings from tenants, provided via the auxiliary input interface instead of via an acquisition system of the meter reading system.

In an embodiment said auxiliary meter readings comprise estimated meter readings.

Estimated meter readings received as auxiliary meter readings may for example come from an external estimation system or from the heat monitoring system if estimations are generated there.

In an embodiment said auxiliary meter readings comprise updated estimated meter readings.

Updated estimated meter readings received as auxiliary meter readings may for example come from an external estimation system or from the heat monitoring system, for example when the heat monitoring system by internal procedures or from external input becomes aware that a previous estimated meter reading can be improved.

In an embodiment said auxiliary meter readings are provided by said heat monitoring system.

The up-to-date meter readings should preferably be synchronized between the meter reading system and the heat monitoring system. The meter reading system may transmit updated meter readings by means of the transmission step at the second, or further second, transmission time, to ensure synchronization in that direction. However, it is also advantageous to allow the heat monitoring system to transmit updated meter readings in the form of auxiliary meter readings to the meter reading system, to synchronize in the opposite direction.

In an embodiment said monitoring period is no longer than a week, such as no longer than a day, for example no longer than an hour or 15 minutes, or a number of seconds.

As described above, the shorter the monitoring period, the higher the resolution in tracking the heat consumption and the usability of the monitoring in control and regulation, and/or detection of irregularities, defects and fraud.

In an embodiment said first acquisition time is at the end of said monitoring period or later.

When the first acquisition time, and preferably the reading time, is at the end of the monitoring period, it may not be necessary to extrapolate meter readings to be comparable at the end of the monitoring period. However, interpolation or averaging may still be necessary if the reading time is significantly after the end of the monitoring period.

In an embodiment said reading times are periodic.

By periodic is understood that the reading times of measured meter readings of a heat submetering device are evenly spaced in time and recurring, i.e. separated in time by a fixed amount of time.

In an embodiment said first and second acquisition times are a first and a second acquisition time period, respectively.

In various embodiments, the meter reading system may not be able to acquire measured meter readings corresponding to the, possibly large, plurality of heat submetering devices at a single point in time. The measured meter readings may arrive over a period of time, which is herein anyway considered to be a common acquisition time. Preferably all measured meter readings received before the first transmission time may be considered belonging to the first acquisition time period.

In an embodiment said measured meter readings received at said first acquisition time are received distributed within said first acquisition time period.

Meter readings may not arrive at the metering system at the same point in time but may arrive during a time period in a plurality of acquisition steps within said time period. Therefore, acquisition time is not necessarily to be construed as a single point in time but may also be construed as a time period between the first meter reading is received until the first transmission time puts an end to which meter readings can be transmitted at the first transmission time.

In an embodiment said first and second transmission times are a first and a second transmission time period respectively.

Transmission of meter readings and updated meter readings may not occur at an instant of time, due to e.g. a large number of readings being transmitted, and may require a period of time for completion. Therefore, the first and second transmission times may also be understood as time periods.

In an embodiment said monitoring period is a first monitoring period and the method of any of the preceding claims is repeated for a second monitoring period following said first monitoring period.

The method may advantageously be repeated for each new monitoring period, so as to establish a stream of calculated and re-calculated heat consumption values, one for each monitoring period. Thereby an evolution of heat consumption in the individual heat consumption arrangements may be provided, and used for control and regulation, or detection of irregularities, defects or fraud.

In an embodiment said step of transmitting one or more updated meter readings associated with a monitoring period is conditioned on an update criterion being met.

Transmission of updated meter readings may be performed as long as an update criterion is met. By an update criterion is understood one or more criteria that needs to be fulfilled for the meter reading system to transmit updated meter readings. The conditioning of the transmission of updated meter readings by an update criterion enables advantageous resource management in that this feature may for instance by utilized to allow the meter reading system to refrain from transmitting updates related to for example monitoring periods that are older than defined by the update criterion, or to not transmit updates unless first agreed with or requested by the heat monitoring system by means of an corresponding update criterion. In a preferred embodiment, the updates relating to recent monitoring periods are always transmitted, whereas updates relating to older monitoring periods, e.g. older than a week, a month or a year, depending on the type of usage of the heat monitoring values, are not transmitted or only transmitted on request. Such differentiation may advantageously be implemented by the conditioning of the transmission step with the update criterion.

In an embodiment said update criterion is received in said auxiliary input interface of said meter reading system.

Receiving the update criterion in the auxiliary input interface of the meter reading system is advantageous in that the update criterion may be defined externally from the meter reading system.

In an embodiment, the update criterion is defined by the heat monitoring system and transmitted to the auxiliary input interface of the meter reading system via the auxiliary output interface from the heat monitoring system. Thereby the heat monitoring system may adaptively control the criterion for updates, for example to manage their resources, or prevent updates in certain circumstances.

In an embodiment, the update criterion is defined by an external system different from the meter reading system and the heat monitoring system, e.g. from an end user being a person or a machine using the calculated heat consumption values.

In an embodiment said update criterion comprises an update expiration time, such as a predetermined number of monitoring periods or a predetermined time period.

In his context the term update expiration time may generally refer to an amount of time or a specific point in time determining if updated meter readings associated with a monitoring period may be transmitted to the heat monitoring system. In a preferred embodiment, the updates relating to recent monitoring periods are always transmitted, whereas updates relating to older monitoring periods are not transmitted in order to reduce resources. The update expiration time may preferably be set according to a balancing between resources required to performing the transmission and managing the data at both ends, the relevance or usability of older data and depending on the type of usage of the heat monitoring values. The update expiration time may for example be a week, a month or a year, or if more convenient for the system implementation, measured in numbers of monitoring periods, for example 10, 100, 256, 1000, or 65536 periods. In an embodiment, updates that has not been transmitted due to the update expiration time being up, may still be transmitted upon request or if fulfilling a different update criterion.

In an embodiment said step of transmitting one or more updated meter readings associated with a monitoring period is conditioned on an update request.

An update request may for example be receivable through the auxiliary input interface, for example for the heat monitoring system, or the update request may be a notification request from the meter reading system informing the heat monitoring system that updates are ready for transmission, and the heat monitoring system may respond with a request to have the updates transmitted. This embodiment is advantageous as it enables the heat monitoring system to be partly in control of updates, more particularly at least being able to deny or allow updates, for example according to the related monitoring periods being too old, being closed for further calculations, etc.

In an embodiment said step of transmitting one or more updated meter readings associated with a monitoring period is conditioned on said heat monitoring system having accepted an update request from said meter reading system.

In an embodiment meter readings received and/or provided in said meter reading system are maintained in said memory of said meter reading system for a predetermined time after said reading times of said meter readings, such as at least 1 year, for example at least 5 years.

The maintenance of transmitted data in the meter reading system is advantageous for allowing retransmission of previously transmitted data, if they disappear or get corrupted in the heat monitoring system. In an embodiment, the meter reading system thereby serves a secondary function as a backup of the raw data of the heat monitoring system used to make the heat consumption value calculations. This may be advantageous from a security perspective, as the meter reading system and heat monitoring system is typically completely separate systems at different locations implemented with different hardware and software and operated by different operators. The maintenance of data at the meter reading system for a certain amount of time also improves the possibility of analysing and tracing errors or peculiarities.

In an embodiment said measured meter readings received in said meter reading system are subject to validation by said meter reading system.

The meter reading system may perform a validation of the measured meter readings being received in the system. A measured meter reading that is corrupted, due to e.g. errors in the acquisition of the reading, may not be used for subsequent calculations and therefore an estimated meter reading may have to be used instead of it. The validation may range from very simple data type validation only disqualifying for example supposed measured meter readings that clearly are not numbers, to more advanced validation for example considering to disqualify a measured meter reading that is a negative number or lower than the last reading from the same meter, or is an unrealistically high number such as the maximum for the data type, or corresponds to decades' worth of consumption. The validation may be performed based on the received data themselves, or be based on prior knowledge such as previous readings from the same meters, etc.

In an embodiment any of said heat submetering devices having corresponding measured meter readings that does not pass said validation are assigned to said non-received devices group.

Before a meter reading is transmitted to the monitoring system, the meter reading is preferably validated in the meter reading system. A meter reading that does not conform with a validation standard in the meter reading system is discarded. Such a discarded meter reading may for example be a corrupted meter reading. The corresponding heat submetering device is then considered in the non-received devices group of heat submetering devices, as no validated measured meter reading exists from that heat submetering devices for the relevant monitoring period. This results in an estimated meter reading being established for the particular heat submetering device to substitute the discarded measured meter reading.

In an embodiment said meter readings and said updated meter readings transmitted to said heat monitoring system are subject to validation by said heat monitoring system.

The heat monitoring system may perform a validation of the transmitted meter readings and updated meter readings. Such a validation may be a formality check ensuring that the transmitted readings are not corrupted and conform with a data standard of the heat monitoring system. The validation may also be a checking of the meter reading compared with previous meter readings of the same heat submetering device, or simultaneous meter readings from other heat consumption arrangements of the common heat supply. If for example, a transmitted meter reading reflects a heat consumption being substantially different from a previous history, a meter reading may not be validated, or an investigation on possible other reasons may be effectuated. This could be the case if a meter reading reflects a significant heat consumption of a heat consumption arrangement with no expected heat consumption, e.g. the heat consumption arrangement is currently not in use and therefore not supposed to be heated, or the other way around, if a meter reading reflects substantially zero consumption in an occupied heat consumption arrangement during a mid-winter monitoring period. If a meter reading does not pass the validation in the heat monitoring system, depending on the reason, the heat monitoring system may for example request a re-transmission from the meter reading system, or discard the reading and produce or request an estimated meter reading for substitution. In the latter case, the heat monitoring system preferably transmits the generated substitute estimated meter reading back to the meter reading system, for example via an auxiliary output interface of the heat monitoring system. This is advantageous in order to keep the meter reading system and heat monitoring system synchronized with respect to the meter readings data that are used, which may also be relevant if the meter reading system is performing its data validation based on previous data.

In an embodiment said calculation and said re-calculation of heat consumption values are performed on the basis of meter readings and updated meter readings that are validated.

In an embodiment one or more of said plurality of heat submetering devices are arranged to transmit measured meter readings to said meter reading system.

In an embodiment, the transmission of measured meter readings from the plurality of heat submetering devices may not necessarily be a one-to-one transmission in which each heat submetering device directly transmits its measured meter readings to the meter reading system. The transmission of a measured meter reading may occur via one or more other heat submetering devices with means for direct communication with the meter reading system. In this sense, a measured meter reading from a first heat submetering device may be transmitted, for example wirelessly over a first distance, to a second heat submetering device or a so-called concentrator device. The second heat submetering device or concentrator may then transmit the measured meter reading, preferably along with other measured meter readings, to the meter reading system, for example over a second distance greater than the first distance. Collecting measured meter readings from more devices in one heat submetering device or concentrator and transmitting the measured meter readings from the latter is advantageous in that energy can be saved since wireless transmissions over long distances is more energy consuming than wireless transmissions over shorter distances.

The transmission of measured meter readings from the heat submetering devices to the meter reading system may also be performed by wired connections, or a mix of communication technologies.

In an embodiment one or more of said plurality of heat submetering devices are battery powered.

Powering a heat submetering device by a battery is advantageous in that a greater freedom of installation on a heat consumption device may be achieved. Furthermore, a battery powered heat submetering device is not susceptible to power outages caused by a failing power grid.

In an embodiment said plurality of heat submetering devices comprise consumption sub-meters, e.g. heat cost allocator sub-meters.

In an embodiment one or more of said heat submetering devices forms part of a distributed network, e.g. forming part of said acquisition system.

Having a distributed network of connected heat measuring devices is advantageous in that power consumption of said one or more heat measuring devices may be reduced. Performing a measurement in a heat measuring device typically requires less energy than transmitting measurements wirelessly, irrespective of the fact that a transmission may comprise several meter readings. Therefore, it is advantageous to consolidate meter readings from several heat measuring devices in a single transmission, thereby saving the energy of transmission which would otherwise be required if each meter reading were to be transmitted locally from its corresponding heat measuring device.

In an embodiment one or more of said one or more measured meter readings received in said meter reading system are received from a concentrator in communicative connection with said plurality of heat submetering devices, e.g. forming part of said acquisition system.

A concentrator may be used to accumulate submeter readings from a plurality of measuring devices and the concentrator may then forward the readings to the metering system.

In an embodiment said step of receiving measured meter readings comprises receiving accumulated measured meter readings from said plurality of heat submetering devices.

When readings are sent to the metering system, the readings may constitute a set of accumulated readings captured by the measuring devices in a period of time leading up to the time at which the readings are sent.

In an embodiment said plurality of heat submetering devices are associated with, such as mounted on, a plurality of heat consumption devices.

In an embodiment said heat consumption arrangements are comprised by a building.

In an embodiment said energy consumption is derived from said common heat supply by a main meter.

The energy consumption corresponding to the plurality of heat consumption arrangements may be derived by a main meter. A main meter is arranged to measure a flow of energy or other physical entities from which a flow of energy can be derived. The main meter may be an energy meter of a district heating system monitored by at least the provider of the heating medium. If the common heat supply comprises for example an oil burner, the main meter may be a fuel flow meter arranged to measure a flow of fuel being burned in the oil burner. An energy consumption for a period of time may be derived from an amount of fuel having passed the fuel flow meter over that same period of time. The main meter may also be an electricity meter in the case where the common heat supply comprises an electrical heat pump arranged to convert electrical energy into heated water or air.

In an embodiment said common heat supply comprises one or more heat supplies selected from the list of a district heating supply, a fluid fuel burner such as an oil or gas burner, a solid fuel burner such as a coal or wood burner and a heat pump solution.

By a heating medium is understood any fluid capable of transferring heat, such as a liquid, for example water or oil, or a gas, for example air or steam.

In an embodiment said calculated and said re-calculated heat consumption values correspond to all of said plurality of heat consumption arrangements.

In an embodiment an estimated meter reading corresponding to a heat submetering device is at least partly based on an extrapolation of previous measured meter readings corresponding to said heat submetering device.

An estimated meter reading may be established on the basis of an extrapolation of previous measured meter readings. By an extrapolation is understood that the estimated meter reading is based on a past history of heat consumption. This is advantageous in that the estimated meter reading may be based on the previous consumption behaviours of the tenant of the heat consumption arrangement in which the heat submetering device is located in. A history of previous heat consumption behaviour may be used as an indication of a future expected heat consumption behaviour.

In an embodiment an estimated meter reading corresponding to a heat submetering device is at least partly based on measured meter readings corresponding to other heat submetering devices of said plurality of heat submetering devices.

An estimated meter reading may be established on the basis of measured meter readings corresponding to other heat submetering devices. In a heat consumption arrangement comprising a plurality of heat consumption devices, a meter reading corresponding to one of the heat consumption devices may be estimated on the basis of measured meter readings corresponding to other heat consumption devices of that heat consumption arrangement, and such a calculation may for example comprise an average of all the other measured meter readings. The estimated meter reading may also be based on measured meter readings from other heat consumption arrangements. Usage of measured meter readings corresponding to another heat consumption arrangement may be beneficial if the two heat consumption arrangements have a previous history of substantially identical heat consumptions.

An aspect of the invention relates to a system for monitoring heat consumption in a plurality of individual heat consumption arrangements supplied with a heating medium by a common heat supply, the system comprising:
a plurality of heat submetering devices distributed in said plurality of individual heat consumption arrangements;
a meter reading system communicatively coupled to said plurality of heat submetering devices;
a heat monitoring system communicatively coupled to said meter reading system;
wherein a part of said plurality of heat submetering devices belongs to a received devices group of said plurality of heat submetering devices and the remaining part belongs to a non-received devices group said plurality of heat submetering devices for a monitoring period;
wherein said meter reading system is arranged to receive one or more measured meter readings at a first acquisition time, each of said one or more measured meter readings corresponding to a respective heat submetering device of said received devices group of said plurality of heat submetering devices;
wherein said meter reading system is further arranged to transmit one or more meter readings to said heat monitoring system at a first transmission time later than said first acquisition time, at least one of said meter readings comprising a representation of one of said one or more received measured meter readings;
wherein said heat monitoring system is arranged to calculate in a first calculation step heat consumption values corresponding to one or more of said plurality of heat consumption arrangements for said monitoring period on the basis of an energy consumption derived from said common heat supply and meter readings corresponding to each of said plurality of heat submetering devices, said energy consumption and said meter readings being associated with said monitoring period, wherein said meter readings comprise estimated meter readings corresponding to heat submetering devices of said non-received devices group of said plurality of heat submetering devices and said at least one of said meter readings comprising said representation of one of said one or more measured meter readings transmitted at said first transmission time;
wherein said system for monitoring heat consumption is arranged to provide in said meter reading system at a second acquisition time after said first transmission time one or more meter readings corresponding to one or more heat submetering devices of said non-received devices group, said meter readings being associated with said monitoring period;
wherein said meter reading system is further arranged to transmit one or more updated meter readings to said heat monitoring system at a second transmission time later than said first transmission time, wherein each updated meter reading comprises one of said one or more meter readings provided in said meter reading system at said second acquisition time; and
wherein said heat monitoring system is arranged to re-calculate in a second calculation step heat consumption values corresponding to one or more of said plurality of heat consumption arrangements for said monitoring period on the basis of said energy consumption and meter readings corresponding to each of said plurality of heat submetering devices, said meter readings being associated with said monitoring period, wherein said meter readings comprise at least said meter readings transmitted at said first transmission time and said updated meter readings transmitted at said second transmission time.

In an embodiment said system for monitoring heat consumption is arranged to carry out the method according to any of the above paragraphs or said system for monitoring heat consumption includes any of the system features of the above paragraphs.

The system for monitoring heat consumption may advantageously be enhanced by any of the embodiments and improvements described above in relation to the method. It is clear from the above, which additional features should be implemented in the meter reading system, the heat monitoring system, the heat submetering devices, or are additional system parts.

An aspect of the invention relates to a meter reading system for use in a system for monitoring heat consumption in a plurality of individual heat consumption arrangements supplied with a heating medium by a common heat supply, the meter reading system comprising
a plurality of heat submetering devices distributed in said plurality of individual heat consumption arrangements and communicatively coupled to said meter reading system;
wherein a part of said plurality of heat submetering devices belongs to a received devices group of said plurality of heat submetering devices and the remaining part belongs to a non-received devices group said plurality of heat submetering devices for a monitoring period;
wherein said meter reading system is arranged to receive one or more measured meter readings at a first acquisition time, each of said one or more measured meter readings corresponding to a respective heat submetering device of said received devices group of said plurality of heat submetering devices, and said measured meter readings being associated with a monitoring period;
wherein said meter reading system is further arranged to transmit one or more meter readings to a heat monitoring system at a first transmission time later than said first acquisition time, at least one of said meter readings comprising a representation of one of said one or more received measured meter readings;
wherein said meter reading system is further arranged to provide at a second acquisition time after said first transmission time one or more meter readings corresponding to one or more heat submetering devices of said non-received devices group, said meter readings being associated with said monitoring period; and
wherein said meter reading system is further arranged to transmit one or more updated meter readings to said heat monitoring system at a second transmission time later than said first transmission time, wherein each updated meter reading comprises one of said one or more meter readings provided in said meter reading system at said second acquisition time.

In an embodiment said meter reading system is further arranged to carry out any of the method steps and features related to the meter reading system according to any of the above paragraphs or said meter reading system includes any of the meter reading system-related features of any of the above paragraphs.

The meter reading system may advantageously be enhanced by any of the embodiments and improvements described above in relation to the method. It is clear from the above, which additional features relates to the meter reading system.

### The drawings

Various embodiments of the invention will in the following be described with reference to the drawings where
fig. 1 illustrates a building comprising heat consumption arrangements supplied with a heating medium by a common heat supply according to an embodiment of the invention,
fig. 2 illustrates a possible way of communication between heat submetering devices and a heat monitoring system via a meter reading system comprising an acquisition system according to an embodiment of the invention,
fig. 3 illustrates a consumption value output interface according to an embodiment of the invention,
fig. 4 illustrates a flow chart of the method of monitoring heat consumption values for a plurality of heat consumption arrangements according to an embodiment of the invention,
fig. 5 shows a process chart illustrating the timing of the acquisitions of measured meter readings, the transmission of meter readings and updated meter readings as well as the calculations of heat consumption values according to an embodiment of the invention,
fig. 6 shows another process chart in which estimated meter readings and updated estimated meter readings are produced by the meter reading system and transmitted to the heat monitoring system according to an embodiment of the invention,
fig. 7 illustrates an application of the method on more than one monitoring period according to an embodiment of the invention,
fig. 8 illustrates an auxiliary communication between the heat monitoring system and the meter reading system comprising an auxiliary output interface and an auxiliary input interface of the two respective systems according to an embodiment of the invention,
fig. 9 illustrates an alternative communication with an external system via the auxiliary input interface according to an embodiment of the invention, and
fig. 10 illustrates an alternative communication between an external system and the heat monitoring system according to an embodiment of the invention.

### Detailed description

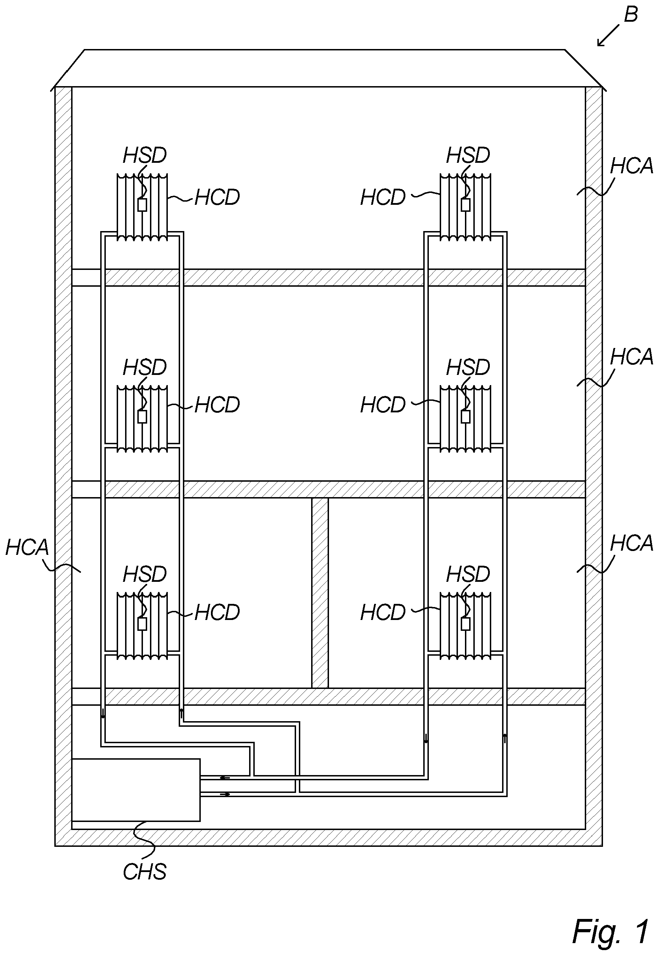

Fig. 1 illustrates an embodiment of the invention. The drawing shows a building (B), such as an apartment housing, comprising four heat consumption arrangements (HCA) located on multiple floors. In this context, the heat consumption arrangements (HCA) may be understood as individual apartments of the apartment housing. The heat consumption arrangements differ in size as exemplified by the two upper heat consumption arrangements having a substantially larger floor area than the two lower heat consumption arrangements that shares a common floor. Each heat consumption arrangement (HCA) is equipped with one or more heat consumption devices (HCD) arranged to provide the heat consumption arrangements (HCA) with space heating. The heat consumption devices (HCD) may, in this context, be understood as heat exchangers in the form of upright standing radiators. Each heat consumption device (HCD), or radiator, is supplied with a heating medium from a common heat supply (CHS) through a network of piping suitable of transferring the heating medium from the common heat supply (CHS) to the heat consumption devices (HCD). In the example of Fig. 1, the six heat consumption devices (HCD) are coupled by two loops of piping, such that the three radiators of each loop are coupled in parallel to the loop. Many other ways of connecting the heat consumption devices (HCD) to the common heat supply (CHS) with piping is conceivable for the skilled person in space heating, however the plurality of heat consumption devices are all supplied with a heating medium by the common heat supply (CHS). The heating medium may be any sort of liquid or gas capable of transferring heat, such as water or steam.

The common heat supply (CHS) shown in this figure may be an actual supplier of a heating medium, such as an oil burner, or merely an input/output terminal for a heating medium supplied from the outside of the building (B), which may be the case for a district heating system. The common heat supply (CHS) may comprise a main meter (not shown) arranged to measure a total energy consumption (EC) of the building (B). The total energy consumption (EC) comprises at least the sum of heat energy consumptions of all the heat consumption arrangements (HCA) but may also comprise heat losses of the piping due to for example ineffective heat insulation of the piping network, and further heat energy used for space heating of rooms shared by all the heat consumption arrangements, such as a cellar room or a ceiling.

Owing to the different sizes of the heat consumption arrangements (HCA), different consumption behaviours of the tenants of the building (B) and the different conditions of the heat consumption arrangements (HCA), the heating requirements may vary greatly between the individual heat consumption arrangements (HCA). Since, the heat consumptions of the heat consumption arrangements (HCA) not necessarily represents equal shares of the total energy consumption (EC), the heat consumptions of the heat consumption arrangements (HCA) cannot directly be inferred from the energy consumption (EC). In order to correctly account for the individual heat consumptions of the heat consumption arrangements (HCA), each heat consumption arrangement's true share of the total energy consumption (EC) of the building (B) has to be established. This may be done by submetering of the individual heat consumption devices (HCD) of the heat consumption arrangements (HCA).

Each of the heat consumption devices (HCD) is monitored by a heat submetering device (HSD). The heat submetering devices (HSD) are arranged to monitor a representation of heat consumption of its associated heat consumption device (HCD). By measuring representations of heat consumption of the individual heat consumption arrangements (HCA) and comparing these to the total energy consumption (EC) of the building (B), the individual heat consumptions of the heat consumption arrangements can correctly be accounted for.

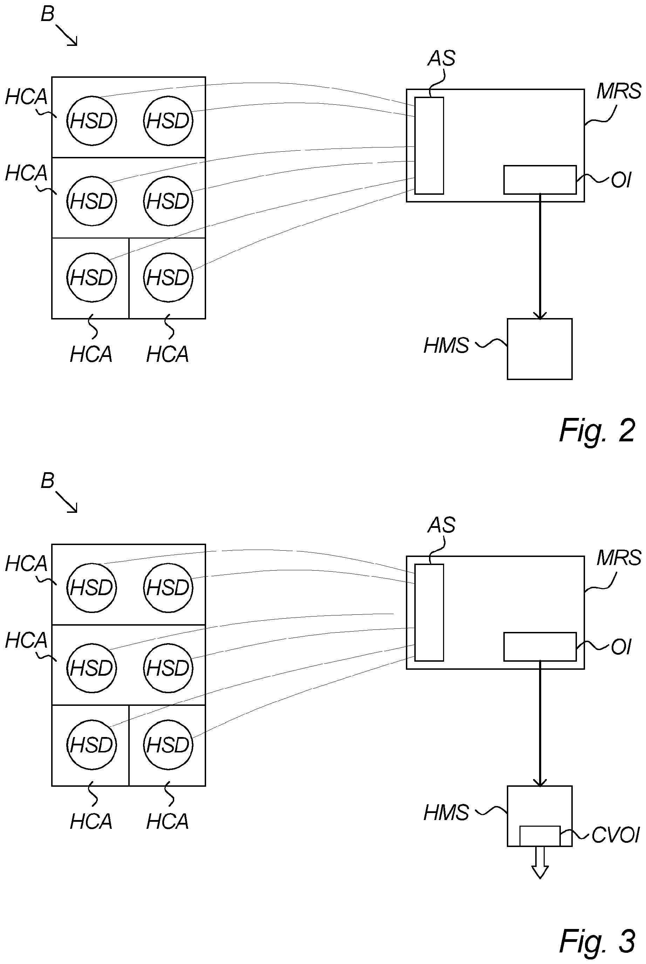

Fig. 2 shows an embodiment of the invention. The drawing shows example of Fig. 1 with the building (B) comprising the four heat consumption arrangements (HCA) comprising the six heat submetering devices (HSD). The six heat submetering devices (HSD) are communicatively coupled to a meter reading system (MRS) as indicated by the six lines terminating in an acquisition system (AS) comprised by the meter reading system (MRS). By communicative coupling is understood that each heat submetering device (HSD) is arranged to pass on measurements of heat consumption to the meter reading system (MRS). The measurements recorded by the heat submetering devices (HSD) are herein referred to as measured meter readings (MMR). The communication of measured meter readings (MMR) from a heat submetering device (HSD) to the meter reading system may occur from the heat submetering device (HSD) itself or through concentrators or neighbouring heat submetering devices (HSD), e.g. one or more of the heat submetering devices (HSD) is arranged to collect measured meter readings (MMR) from other devices and pass these, along with their own measured meter readings (MMR), on to the meter reading system (MMR).

The meter reading system (MRS) is understood as a system capable of acquiring measured meter readings from the heat submetering devices (HSD), and the acquisition of meter readings is performed via an acquisition system (AS) associated with the meter reading system (MRS). The acquisition system (AS) is a system that facilitates a communication channel between the heat submetering devices (HSD) and the meter reading system (MRS), such that measurements from the heat submetering devices (HSD) can be transferred into the meter reading system (MRS). Preferably the acquisition system facilitates a wireless connection, for instance based on radio frequency communication, e.g. a proprietary remote meter reading system, a low-power Wi-Fi technology, etc, or alternatively, the acquisition system (AS) may comprise wired connections to the heat submetering devices (HSD). The acquisition system may also comprise a mix of communication technologies.

The meter reading system (MRS) further comprises an output interface (OI) arranged to transmit meter readings (MR) to a heat monitoring system (HMS). The meter readings (MR) may comprise representations of the measured meter readings (MMR) acquired in the meter reading system (MRS), or other meter readings (MR) such as estimated meter readings or meter readings acquired otherwise. The measured meter readings may be processed, for example with respect to format or by application of correction factors, within the meter reading system (MRS) before being transmitted to the heat monitoring system (HMS).

The heat monitoring system (HMS) is a system arranged to monitor levels of heat consumption corresponding to the heat consumptions of the heat consumption arrangements (HCA) of the building (B). These heat consumptions are also referred to as heat consumption values (HCV). The heat monitoring system may receive an energy consumption (EC) of the building (B) as measured by the main meter (not shown). On the basis of the meter readings (MR) received from the meter reading system (MRS) and the energy consumption (EC) of the building (B), the heat monitoring system (HMS) can calculate heat consumption values (HCV) of the individual heat consumption arrangements (HCA) of the building (B).

Fig. 3 shows a further embodiment where the heat monitoring system (HMS) further comprises a consumption value output interface (CVOI). The consumption value output interface (CVOI) is an interface through which the calculated heat consumption values (HCV) are provided. The calculated heat consumption values (HCV) may be provided for subsequent visualization of the heat consumption values (HCV). As an example, the heat monitoring system (HMS) may be associated with a display arranged to visualize the heat consumption of one or more of the heat consumption arrangements (HCA) of the building (B). The heat consumption values (HCV) provided by the consumption value output interface (CVOI) may alternatively be accessed by an external system different from the meter reading system (MRS) and the heat monitoring system (HMS). Examples of external systems may be processing devices such as handheld devices used by the tenants or operators of the building (B).

The heat consumption values (HCV) may be represented using various units of heat, such as kilowatt hours and units derived from joule, such as kilojoule and megajoule.

The heat monitoring is conducted with respect to monitoring periods (MP). Monitoring period (MP) is the time resolution of the monitoring of heat consumption and is understood as the divisions of time for which heat consumption values (HCV) are calculated for the heat consumption arrangements (HCA). The monitoring period may for example be a week, a day, an hour, a minute, etc. A monitoring period (MP) of an hour, means that the heat monitoring system (HMS) calculates heat consumption values for every hour, and an operator, tenant, a machine or another user is thereby able to 'zoom in' and monitor the heat consumption on an hourly basis. Reducing the monitoring period to for example one second, increases the monitoring resolution considerably, and allows one to follow the heat consumption second by second.

Meter readings (MR) and energy consumption (EC) being associated with a certain monitoring period (MP) is referring to the meter readings (MR) and energy consumption (EC) that are used to calculate the heat consumption values (HCV) for that monitoring period (MP). Depending in the desired accuracy and the practically implementable timing, the meter readings (MR) for a certain monitoring period (MP) may be synchronized with the end of that monitoring period or simply be measured in a time span around the end of the monitoring period or at any time. The error produced by non-ideal reading times in relation to the monitoring period may be considered insignificant to the desired accuracy, may be compensated for by various averaging or interpolation techniques. The visualization of heat consumption values (HCV) may comprise a visualization of heat consumption for one or more previous monitoring periods (MP).

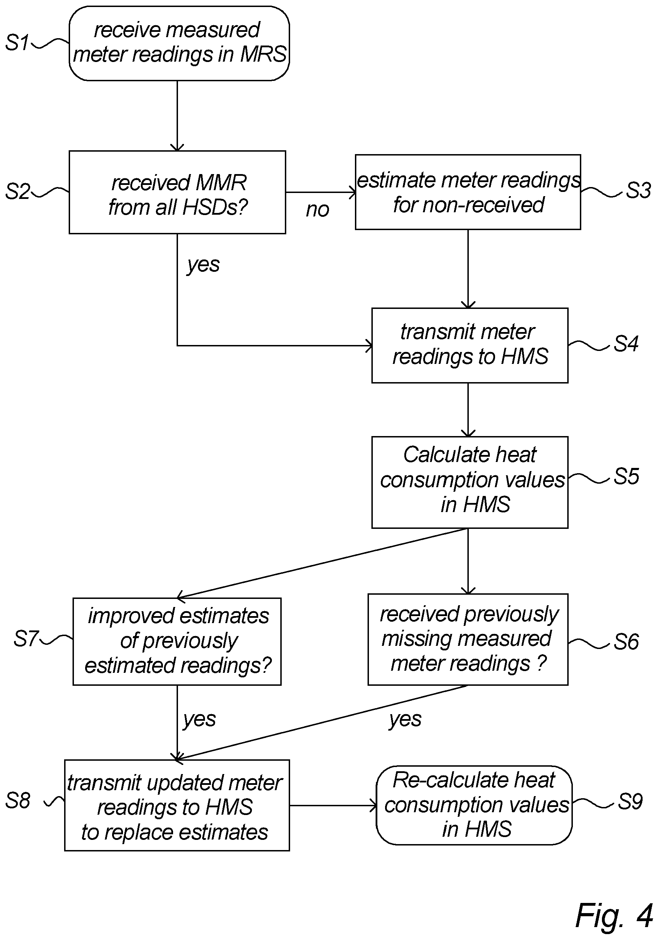

Fig. 4 shows a flow chart of an embodiment of the invention. The flow chart shows a number of method steps (S1-S9) for monitoring heat consumption values (HCV) of a plurality of heat submetering devices (HSD). In the first step (S 1) the meter reading system (MRS) receives measured meter readings (MMR) for a common monitoring period (MP) from a number of heat submetering devices (HSD) associated with a common heat supply (CHS). By a common monitoring period (MP) is understood that the measured meter readings correlate substantially in time, i.e. the measured meter readings from the plurality of heat submetering devices may be recorded at various points in time and are therefore distributed within a given time period. As an example, a measured meter reading may have been recorded in the middle of the monitoring period, and still be representative of that time period, although the time period extends beyond the time of recording, also referred to as the reading time (RT). The distribution over time of the reading times of measured meter readings (MMR) may arise due to different configurations of the heat submetering devices (HSD). Some devices may be able to record measured meter readings more often than others, and the devices may further be out of phase with each other, thus leading to measured meter readings (MMR) having reading times (RT) that are different for a given monitoring period (MP), i.e. the common monitoring period.

For many reasons, it may turn out that measured meter readings for some heat submetering devices (HSD) are missing in the meter reading system (MRS) for the common monitoring period (MP) although they were planned to be acquired. This may be due to errors in the communication link between the heat submetering devices (HSD) and the meter reading system (MRS). Alternatively, the error may be due to faulty heat submetering devices (HSD). Therefore, a distinction is made between heat submetering devices (HSD) belonging to a received devices group and a non-received devices group. The received devices group comprises the heat submetering devices (HSD) from which measured meter readings (MMR) are received in the meter reading system (MRS) for the common monitoring period (MP) in the step (S 1), as opposed to the non-received devices group comprising heat submetering devices (HSD) from which measured meter readings (MMR) are not received in the meter reading system (MRS) for the common monitoring period (MP) at the step (S1). The status of being in the non-received devices group may be temporary, so because a heat submetering device (HSD) belongs to the non-received devices group it does not exclude it from sending or resending a measured meter reading (MMR) for that common monitoring period (MP) at a later time.

The meter reading system (MRS) may in a next step (S2) determine whether or not measured meter readings (MMR) are received from all expected heat submetering devices (HSD). If the meter reading system (MRS) receives meter readings from all of the plurality of heat submetering devices (HSD), the system may in a step (S4) transmit meter readings (MR) associated with all heat submetering devices (HSD) for the common monitoring period (MP) to the heat monitoring system (HMS). These meter readings (MR) may comprise representations of the measured meter readings (MMR) received in the step (S 1).

In the case that measured meter readings (MMR) corresponding to the monitoring period (MP) are not received for one or more of the heat submetering devices (HSD), estimates of these measured meter readings (MMR) have to be established in order to carry out a calculation of heat consumption values (HCV), which requires meter readings (MR) of all the heat submetering devices (HSD) associated with the monitoring period (MP). These estimates, which are established in the step (S3), are also referred to as estimated meter readings (EMR) and transmitted to the heat monitoring system (HSM) in step (S4) together with the measured meter readings (MMR) that were received for the monitoring period (MP).

In the example of Fig. 4 the estimated meter readings (EMR) are produced by the meter reading system (MRS) and thus transmitted as part of the meter readings (MR) from the meter reading system (MRS) to the heat monitoring system (HMS) in step (S4). In another embodiment the heat monitoring system (HMS) may be in charge of producing estimated meter readings (EMR) for the non-received devices group of heat submetering devices (HSD). If the estimated meter readings (EMR) are produced by the meter reading system (MRS), the meter reading system (MRS) is arranged to transmit meter readings (MR) comprising the representation of measured meter readings (MMR) received in the step (S1) as well as the estimated meter readings (EMR). These meter readings (MR) are transmitted to the heat monitoring system (HMS) in the step (S4). In the case where the estimated meter readings (EMR) are produced by the heat monitoring system (HMS), the step (S3) appears after step (S4).

Once the heat monitoring system (HMS) has meter readings associated with the monitoring period (MP) for all heat submetering devices (HSD), the heat monitoring system (HMS) is in a position to calculate heat consumption values (HCV) for the heat consumption arrangements (HCA). This calculation is performed in the step (S5) on the basis of the transmitted meter readings (MR). The calculation is further based on the energy consumption (EC) associated with the common heat supply (CHS) as described in more detail below.

To demonstrate a calculation of heat consumption values (HCV) is here given an example using the six heat submetering devices (HSD) comprised by the building (B) illustrated in Fig. 1. The six heat submetering devices (HSD) are labelled by HSD#1-HSD#6. The first two heat submetering devices (HSD#1-HSD#2) are comprised by a first heat consumption arrangement (HCA), the third and fourth heat submetering devices (HSD#3-HSD#4) are comprised by a second heat consumption arrangement (HCA), and the last two heat submetering devices (HSD#5-HSD#6) are comprised by their own respective heat consumption arrangements (HCA). The example shows a general approach to calculating heat consumption values (HCV) based on a comparison of meter readings (MR) associated with the same monitoring period (MP) but having different reading times (RT), i.e. they are not recorded at the exact same time. In this example the calculation of heat consumption values (HCV) corresponding to a second monitoring period (MP2) for the four heat consumption arrangements (HCA) is done by comparing meter readings associated with the second monitoring period (MP2) to meter readings (MR) corresponding to the previous, first monitoring period (MP1). In this example, the meter readings (MR) may comprise reading times (RT) within their corresponding monitoring periods (MP), for example in the end of the monitoring periods (MP), such that any difference between two meter readings (MR) corresponding to the same heat submetering device (HSD) and corresponding to the two monitoring periods (MP1, MP2) may substantially reflect the heat consumption of the second monitoring period (MP2). The monitoring periods (MP1, MP2) in this example may be 24 hours.

Meter readings (MR) corresponding to the six heat submetering devices and corresponding to the first monitoring period (MP1) are shown in the second column of Table 1, below, labelled MR_{MP1}. Likewise, meter readings (MR) for the same heat submetering devices corresponding to the second monitoring period (MP2) are shown in the second column labelled MP_{MP2}. Two of the meter readings (MR) corresponding to the second monitoring period (MP2) are estimated meter readings (EMR) and these have been highlighted by an asterisk sign, i.e. the meter readings corresponding to the second and fifth heat submetering devices (HSD#2, HSD#5). The other meter readings are measured meter readings (MMR) received from the heat submetering devices (HSD).

By subtracting the meter readings (MR) of the first monitoring period (MP1) from the meter readings (MR) of the second monitoring period (MP2) the changes in meter readings (MR) from the first monitoring period (MP1) to the second monitoring period (MP2) are calculated. These changes are found in the fourth column labelled MR_{MP2-MP1}. These changes reflect units of heat consumed by the corresponding six heat consumption devices over the duration of the second monitoring period (MP2). As indicated in the table, the total heat consumption corresponding to the six heat consumption devices amounts to 17.1 units of heat. However, the typical heat submetering devices (HSD) do not measure absolute heat, but simply record representations of heat consumption referred to above as units of heat. To map these units to actual heat, the total heat consumption of the building, as well as the total of units of heat has to be known or estimated.

In this example, the total energy consumption (EC) of the building (B) as for example measured by a main meter of the common heat supply (CHS) consumed during the second monitoring period (MP2) is 143 kWh, i.e. 143 kilowatt-hours.

**Table 1.**

| HSD# | MR_{MP1} | MR_{MP2} | MR_{MP2-MP1} | HCV_{HSD}[kWh] | HCV_{HCA}[kWh] |
|---|---|---|---|---|---|
| 1 | 37.2 | 42.4 | 5.1 | 42.6 | 61.8 |
| 2 | 19.6 | 21.9* | 2.3 | 19.2 | |
| 3 | 18.9 | 20.8 | 1.9 | 15.9 | 45.2 |
| 4 | 24.1 | 27.6 | 3.5 | 29.3 | |
| 5 | 29.7 | 31.2* | 1.5 | 12.5 | 12.5 |
| 6 | 12.6 | 15.5 | 2.8 | 23.4 | 23.4 |
| | | **Total:** | **17.1** | **143** | **143** |

Knowing the individual heat submetering devices' measured share of the total heat consumption of 17.1 units of heat, it is possible to calculate the heat consumption values (HCV) corresponding to the heat submetering devices (HCV). For example, over 24 hours the first heat submetering device (HSD#1) has measured a consumption of 5.1 units of heat, which amounts to about 29.8 percent of the sum of units of heat of 17.1. Thereby the first heat submetering device (HSD# 1) also accounts for the same about 29.8 percent of the total heat consumption, i.e. 29.8 percent of 143 kWh which amounts to 42.6 kWh. Heat consumption values (HCV), in units of kilowatt hours, corresponding to all of the heat submetering devices (HSD#1-HSD#6) can thus be calculated and are shown in column 5 labelled HCV_{HSD}. By knowing which heat submetering devices (HSD#1-HSD#6) belongs to which heat consumption arrangements (HCA), it is possible to calculate total heat consumption values (HCV) for the four individual heat consumption arrangements (HCA) of the building (B). These values are shown in the sixth column labelled HCV_{HCA}.

Since Table 1 represents heat consumption values (HCV) that are based on estimated meter readings (EMR), the values can only be approximations of actual heat consumptions. The values are thus prone to improvements by use of updated estimated meter readings (UEMR) or by use of the actual measured meter readings (MMR) which the estimated meter readings (EMR) were substitutes for.

This possibility is shown in the later steps of Fig. 4. In step (S6), measured meter readings (MMR) of heat submetering devices of the non-received devices group that were not previously received in the meter reading system (MRS) in the first step (S1) and for which estimated meter readings (EMR) where therefore generated for the calculation of heat consumption values (HCV), may become available if the non-received statues of the heat submetering was merely of temporary nature or the measured meter readings may be obtained in a different manner. These readings may be transmitted from the heat submetering devices (HSD) of the non-received devices group of heat submetering devices (HSD) or be provided to the meter reading system (MRS) via an external system different from the meter reading system (MRS) and the heat monitoring system (HMS), for example by manual reading of the display of the heat submetering device. The new knowledge of actual readings for a previous monitoring period instead of estimates may be used to improve the calculation of heat consumption among the heat consumption arrangements in that previous monitoring period and/or be used to produce better estimates for future non-received devices.

Further, as seen in step (S7), it may be possible to generate new, improved estimates to substitute previously estimated meter readings (EMR). This may for example occur when the monitoring period is very short, for example in terms of seconds or minutes, and a fast estimate then have to be provided immediately for non-received devices, but a slower, more elaborate or based on different data, updated estimated meter reading (UEMR) may be generated with more time or after other data becomes available. If estimates are based on measured readings from other heat submetering devices, for example neighbouring devices, the estimates may have to be re-estimated if real measured data becomes available for neighbours that were previously estimated. The updated estimates for an earlier monitoring period may be used to improve the calculation of that monitoring period or as basis for future estimates.

Hence, updated meter readings (UMR) for the same monitoring period as previously transmitted meter readings (MR) may occur in the meter reading system comprising either measured meter readings (MMR) or updated estimated meter readings (UEMR) for previously estimated heat submetering devices (HSD).

In step (S8), the meter reading system (MRS) transmits updated meter readings (UMR), comprising the measured meter readings (MMR) of step (S6) and/or updated estimated meter readings (UEMR) of step (S7), to the heat monitoring system (HMS). Preferably, only updated meter readings are transmitted in step (S8). Non-updated meter readings for the monitoring period were already transmitted at step (S4).

In a following step (S9), the heat monitoring system (HMS) calculates new heat consumption values (HCV) on the basis of the meter readings (MR) transmitted at the step (S4) and the updated meter readings (UMR) transmitted at the step (S8).

Continuing the above example of calculations of heat consumption values (HCV), the updated meter readings (UMR), comprising measured meter readings (MMR) received at the later point in time, for devices for which estimated meter readings (EMR) were used in Table 1. Table 2 below shows the new meter readings (MR), where the meter readings corresponding to the second and fifth heat submetering devices (HSD#2, HSD#5) are updated, i.e. 23.1 replaces 21.9 and 31.9 replaces 31.2. In this example, both estimates turned out to be lower than the real values. The update of meter readings results in a new total heat consumption of 19 units of heat, as measured by the six heat submetering devices (HSD#1-HSD#6). The total energy consumption (EC) of the building is still 143 kWh in this example. It is important to note, that the updated meter readings (MR_{MP1}) for two out of six devices affect the previously calculated heat consumption values (HCV), and not only the heat consumption values corresponding to the second and fifth heat submetering devices, but also all other devices.

**Table 2.**

| HSD# | MR_{MP0} | MR_{MP1} | MR_{MP1-MP0} | HCV_{HSD} [kWh] | HCV_{HCA} [kWh] |
|---|---|---|---|---|---|
| 1 | 37.2 | 42.4 | 5.1 | 38.4 | 64.7 |
| 2 | 19.6 | 23.1 | 3.5 | 26.3 | |
| 3 | 18.9 | 20.8 | 1.9 | 14.3 | 40.6 |
| 4 | 24.1 | 27.6 | 3.5 | 26.3 | |
| 5 | 29.7 | 31.9 | 2.2 | 16.6 | 16.6 |
| 6 | 12.6 | 15.5 | 2.8 | 21.1 | 21.1 |
| | | **Total:** | **19.0** | **143** | **143** |

In a large building (B) comprising many heat consumption arrangements (HCA), and thereby many heat submetering devices (HSD), it may be necessary to use many more estimated meter readings (EMR), and the corresponding measured meter readings (MMR) may arrive in the meter reading system (MRS) over the course of a period greater than one or more monitoring periods (MP).

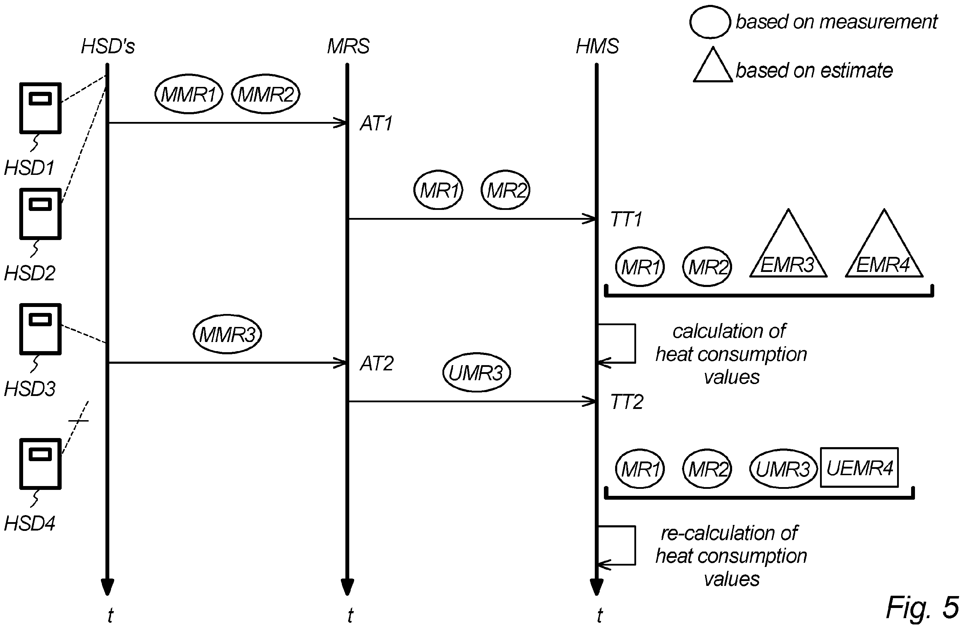

Fig. 5 shows an embodiment of the invention. Specifically, fig. 5 shows an example of the timing of a heat monitoring method from the perspective of the heat submetering devices (HSD), the meter reading system (MRS) and the heat monitoring system (HMS). The drawing shows four heat submetering devices (HSD1-HSD4) that are associated with heat consumption devices (HCD) supplied by a common heat supply (CHS). The meter reading system (MRS) receives two measured meter readings (MMR1-MMR2) corresponding to the first and second heat submetering devices (HSD1-HSD2) at a first acquisition time (AT1). The measured meter readings (MMR1-MMR2) are associated with a common monitoring period (MP). Ideally, the meter reading system (MRS) would also receive measured meter readings (MMR) associated with the same monitoring period (MP) corresponding to the other two heat submetering devices (HSD3-HSD4), however, for some reasons, measured meter readings (MMR) pertaining to these devices are not received in the meter reading system (MRS) at the first acquisition time (AT1). Thus, the third and fourth heat submetering devices (HSD3-HSD4) are associated with the non-received devices group. The first acquisition time (AT1) may be understood as a time interval over which the measured meter readings (MMR) corresponding to heat submetering devices (HSD) of the received devices group are received in the meter reading system (MRS).

Once acquired in the meter reading system (MRS) the measured meter readings may be processed by the system to produce meter readings (MR). Since only two measured meter readings (MMR1-MMR2) were received at the first acquisition time, the meter reading system only produces two corresponding meter readings (MR1-MR2), which are transmitted to the heat monitoring system (HMS) at a first transmission time (TT1). The first transmission time (TT1) may be understood as a time interval over which the meter readings (MR) are transmitted to the heat monitoring system (HMS).

After the first transmission time (TT1), the heat monitoring system (HMS) may calculate heat consumption values (HCV) corresponding to heat consumption arrangements (HCA) wherein the heat submetering devices (HSD) are located. In this example, the calculation is based on the two transmitted meter readings (MR1-MR2) and, since meter readings (MR) corresponding to the third and fourth heat submetering devices (HSD3-HSD4), associated with the same monitoring period (MP), are not present, the heat monitoring system (HMS) may have to use estimated meter readings (EMR3-EMR4) for these.

At a second acquisition time (AT2), after the first acquisition time (AT1) and after the first transmission time (TT1), the meter reading system (MRS) receives the measured meter reading (MMR3), associated with the same monitoring period, from the third heat submetering device (HSD3). This measured meter reading is represented by an updated meter reading (UMR3) and transmitted to the heat monitoring system (HMS) at a second transmission time (TT2). Likewise, the second transmission time may be understood as a time interval over which updated meter readings (UMR) are transmitted to the heat monitoring system (HMS).

For some reason, the measured meter reading corresponding to the fourth heat submetering device (HSD) is never received in the meter reading system (MRS). Such a scenario could be explained by the heat submetering device (HSD4) being battery-powered and the battery has run out, or due to the device being defective in any other way. Lastly, it could also be due to an error in the transmission of the reading to the meter reading system (MRS).

In light of the new transmitted updated meter reading (UMR3) the heat monitoring system (HMS) may re-calculate the previously calculated heat consumption values (HCV). This calculation is thus based on the two meter readings (MR1-MR2) transmitted at the first transmission time (TT1), the updated meter reading (UMR3) transmitted at the second transmission time (TT2) and now replacing the previous estimated meter reading (EMR3), and an estimate for the fourth heat submetering device (HSD4). This last estimate may be the estimated meter reading (EMR4) used before, or as shown in the figure, an updated estimated meter reading (UEMR4). Following an update/replacement of a reading as shown in this figure, it is likely that a better estimate, i.e. an updated estimated meter reading (UEMR), may be produced, since such an estimate may depend on other readings that have been updated. In this embodiment, the estimated meter readings (EMR) and the updated estimated meter readings are produced in the heat monitoring system (HMS).

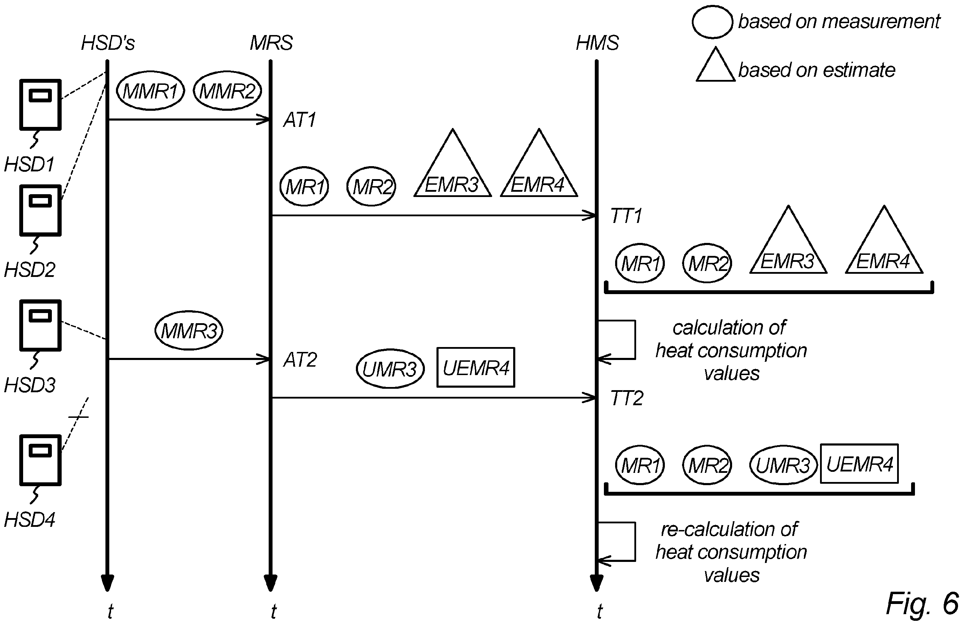

Fig. 6 shows another embodiment which is a variation of the embodiment shown in fig. 5. In this embodiment, the role of producing estimated meter readings (EMR) and updated estimated meter readings (UEMR) is assigned to the meter reading system (MRS). In this case, the meter reading system (MRS) may transmit the estimated meter readings (EMR3-EMR4) along with the meter readings (MR1-MR2) in the first transmission, and the updated estimated meter reading (UEMR4) along with the updated meter reading (UMR3) in the second transmission.

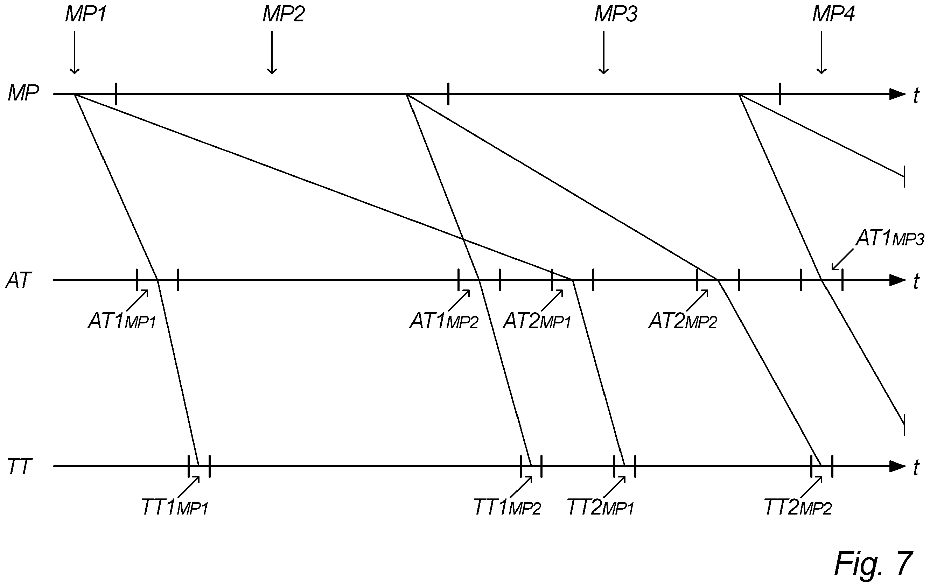

Fig. 7 shows an example over longer time, including multiple monitoring periods (MP1-MP4), and acquisition times and transmission times corresponding to these monitoring periods. Measured meter readings (MMR) associated with the first monitoring period (MP1) may be received in the meter reading system (MRS) at a first acquisition time (AT1_{MP1}) and at a second acquisition time (AT2_{MP1}) later than the first acquisition time. Likewise, measured meter readings (MMR) corresponding to a second monitoring period (MP2) may be acquired at first and second acquisition times (AT1_{MP2}, AT2_{MP2}), and similarly for following monitoring periods (MP3, MP4, ...). The ordering of the acquisition times may not necessarily be according to the chronological ordering of the monitoring periods (MP), as illustrated by the first acquisition time (AT1_{MP2}) of the second monitoring period (MP2) being the next acquisition in the meter reading system (MRS) after the first acquisition time (AT1_{MP1}) of the first monitoring period (MP1). The drawing shows that all acquisition times may be understood as time intervals of finite lengths. The lengths of the acquisition time intervals may not necessarily be identical.

Subsequent to each acquisition is a corresponding transmission of meter readings (MR) or updated meter readings (UMR). The readings acquired at the first transmission time (AT1_{MP1}) and corresponding to the first monitoring period are transmitted at the corresponding first transmission time (TT1_{MP1}). The readings acquired at the second acquisition time (AT2_{MP1}) and corresponding to the first monitoring period (MP1) are transmitted at the corresponding second transmission time (TT2_{MP1}). The same applies for all other acquisition times. As seen in the figure the transmission times may be understood as time intervals of finite length. The lengths of the transmission time intervals may not necessarily be identical, and they may be shorter than the acquisition time intervals. The time intervals of the acquisition times (AT) may in an embodiment simply be defined by the transmission times (TT), so that an acquisition time for a certain monitoring period starts when the first measured meter reading associated with the monitoring period arrives, and the first acquisition time ends when it is time to transmit the so-far received measured meter readings to the heat monitoring system at the first transmission time. Anything received after this but associated with the same monitoring period is considered received at the second (or further) acquisition time.

The transmission times may for example be pre-determined times relative to monitoring periods at which the heat monitoring system requires to receive meter readings in order to be able to calculate heat consumption value for the monitoring periods. For example, the heat monitoring system may be required to calculate heat consumption values for a certain monitoring period no later than 2 hours into the next monitoring period, and should therefore receive meter readings, being measured or estimated, for all heat submetering devices in time to meet this requirement for the calculation time. This, in turn, may require the first transmission time to be no later than 1 hour into the next monitoring period. Measured meter readings that are received later, or estimates that can be improved with more time, can then be transmitted at a second transmission time, and lead to recalculation of the heat consumption values.

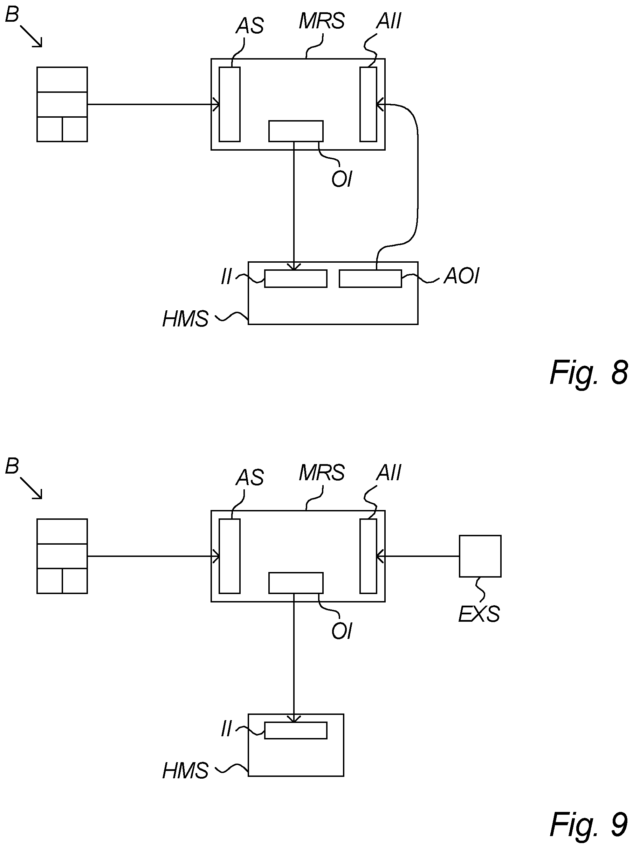

Fig. 8 shows an embodiment of the invention in which the meter reading system (MRS) comprises, in addition to an acquisition system (AS) and an output interface (OI), an auxiliary input interface (AII) arranged to receive auxiliary meter readings (AMR). In this embodiment, the heat monitoring system (HMS) comprises, in addition to an input interface (II), an auxiliary output interface (AOI) arranged to transmit auxiliary meter readings (AMR) to the auxiliary input interface (AII) of the meter reading system (MRS).

The auxiliary meter readings (AMR) may comprise any of the following; measured meter readings (MMR), estimated meter readings (EMR), and updated estimated meter readings (UEMR). As an example, auxiliary meter readings (AMR) may represent measured meter readings (MMR) that are read off the heat submetering devices (HSD) manually, and therefore not automatically transmitted to the meter reading system (MRS) via the acquisition system (AS). Such a manual reading of measured meter reading (MMR) may be facilitated by a display located on the heat submetering device (HSD) and may for some reason more conveniently be received in the heat monitoring system (HMS) than directly in the meter reading system (MRS). For example, the person performing the manual reading may be a user of the heat monitoring system (HMS) and wondering about the calculated heat consumption values. Obtaining manual readings of measured meter readings (MMR) may also be relevant if for example a heat submetering device is subject to systematic errors in its transmission, i.e. the device transmits readings that are systematically greater than the actual readings which may be read off on the display. Need of manual readings of meter readings may also be necessary for heat submetering devices (HSD) that for some reason cannot establish a connection with the meter reading system (MRS) but are still capable of generating measured meter readings (MMR). In this embodiment, the auxiliary meter readings (AMR) may be transmitted from the heat monitoring system (HMS) by a user associated with the heat monitoring system (HMS).

In an embodiment where the heat monitoring system (HSM) is generating estimated meter readings (EMR), the auxiliary meter readings (AMR) may be used to synchronize the meter reading system (MRS) with the estimates generated by the heat monitoring system (HSM).

The auxiliary output interface (AOI) of the heat monitoring system (HMS) and the auxiliary input interface (AII) of the meter reading system (MRS) may also be able to exchange other types of data, such as error reports pertaining to previously transmitted meter readings (MR) and/or updated meter readings (UMR) transmitted from the meter reading system (MRS) to the heat monitoring system (HMS). In this sense, the auxiliary output interface (AOI) and the auxiliary input interface (AII) may be seen as a feedback channel from the heat monitoring system (HMS) to the meter reading system (MRS).

Fig. 9 shows another embodiment of the invention where the meter reading system (MRS) comprises an auxiliary input interface (AII). Compared to the embodiment of Fig. 8, the interface is in the embodiment of Fig. 9 arranged to receive auxiliary meter readings (AMR) as described above, or other auxiliary data types as described above, from an external system (EXS) different from both the meter reading system (MRS) and the heat monitoring system (HMS). Thereby the meter reading system (MRS) may be able to receive manual read measured meter readings from other channels than the heat monitoring system, or receive automatically acquired meter readings from other system not compatible with the acquisition system (AS).

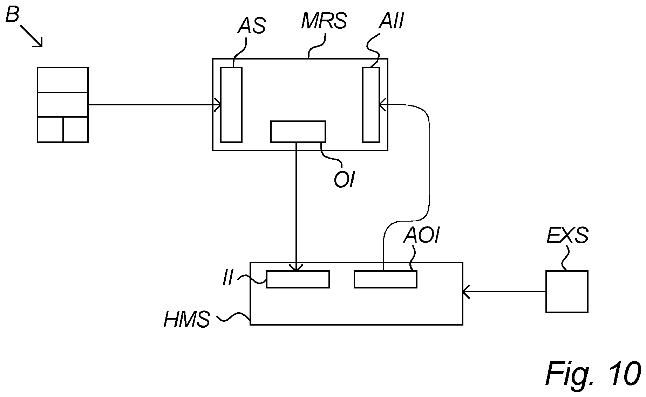

Fig. 10 shows an embodiment of the invention which is an alternative to the embodiment shown on fig. 9. In this embodiment, the external system (EXS) is still arranged to transmit auxiliary meter readings (AMR) or other types of auxiliary data, however the transmission is to the heat monitoring system (HMS) which may be arranged to transmit these to the meter reading system (MRS) via an auxiliary channel comprising an auxiliary output interface (AOI) and an auxiliary input interface (AII).
The embodiments of Figs. 8-10 may be combined, so that several of these channels for auxiliary meter readings and other data are implemented at the same time, for example to allow the meter reading system to receive auxiliary data from both the heat monitoring system and an external system.

### List of reference signs:

- AII: Auxiliary input interface
- AMR: Auxiliary meter readings
- AOI: Auxiliary output interface
- AS: Acquisition system
- AT1: First acquisition time
- AT2: Second acquisition time
- B: Building
- CHS: Common heat supply
- EC: Energy consumption
- EMR: Estimated meter reading
- EXS: External system
- HCA: Heat consumption arrangement
- HCV: Heat consumption value
- HMS: Heat monitoring system
- HSD: Heat submetering device
- II: Input interface
- MM: Main meter
- MMR: Measured meter reading
- MP: Monitoring period
- MP1: First monitoring period
- MP2: Second monitoring period
- MR: Meter reading
- MRS: Meter reading system
- OI: Output interface
- RT: Reading time
- TT1: First transmission time
- TT2: Second transmission time
- UEMR: Updated estimated meter reading
- UMR: Updated meter reading

## Claims

1. A method of monitoring heat consumption using a plurality of heat submetering devices (HSD) distributed in a plurality of individual heat consumption arrangements (HCA) supplied with a heating medium by a common heat supply (CHS), said plurality of heat submetering devices (HSD) comprising heat cost allocator sub-meters mounted on a plurality of heat consumption devices (HCD) and being communicatively associated with a meter reading system (MRS), the method comprising:
receiving in said meter reading system (MRS) one or more measured meter readings (MMR) at a first acquisition time (AT1), each of said one or more measured meter readings (MMR) corresponding to a respective heat submetering device (HSD) of a received devices group of said plurality of heat submetering devices (HSD);
transmitting one or more meter readings (MR) to a heat monitoring system (HMS) at a first transmission time (TT1) later than said first acquisition time (AT1), at least one of said meter readings (MR) comprising a representation of one of said one or more received measured meter readings (MMR);
monitoring in said heat monitoring system (HMS) heat consumption values (HCV) corresponding to one or more of said plurality of heat consumption arrangements (HCA), said heat consumption values (HCV) being calculated in a first calculation step for a monitoring period (MP) on the basis of an energy consumption (EC) derived from said common heat supply (CHS) and meter readings (MR) corresponding to each of said plurality of heat submetering devices (HSD), said energy consumption (EC) and said meter readings (MR) being associated with said monitoring period (MP), wherein said meter readings (MR) comprise estimated meter readings (EMR) corresponding to heat submetering devices (HSD) of a non-received devices group of said plurality of heat submetering devices (HSD) and said at least one of said meter readings (MR) comprising said representation of one of said one or more measured meter readings (MMR) transmitted at said first transmission time (TT1);
providing in said meter reading system (MRS) at a second acquisition time (AT2) after said first transmission time (TT1) one or more meter readings (MR) corresponding to one or more heat submetering devices (HSD) of said non-received devices group, said meter readings (MR) being associated with said monitoring period (MP);
transmitting one or more updated meter readings (UMR) to said heat monitoring system (HMS) at a second transmission time (TT2) later than said first transmission time (TT1), wherein each updated meter reading (UMR) comprises one of said one or more meter readings (MR) provided in said meter reading system (MRS) at said second acquisition time (AT2); and
re-calculating in said heat monitoring system (HMS) in a second calculation step heat consumption values (HCV) corresponding to one or more of said plurality of heat consumption arrangements (HCA) for said monitoring period (MP) on the basis of said energy consumption (EC) and meter readings (MR) corresponding to each of said plurality of heat submetering devices (HSD), said meter readings (MR) being associated with said monitoring period (MP), wherein said meter readings (MR) comprise at least said meter readings (MR) transmitted at said first transmission time (TT1) and said updated meter readings (UMR) transmitted at said second transmission time (TT2).

2. The method according to claim 1 wherein said energy consumption (EC) is derived from said common heat supply (CHS) by a main meter (MM).

3. The method according to any of the preceding claims wherein said meter readings (MR) and/or updated meter readings (UMR) transmitted to said heat monitoring system (HMS) are transmitted from said meter reading system (MRS).

4. The method according to any of the preceding claims wherein said meter reading system (MRS) comprises an auxiliary input interface (AII) arranged to receive auxiliary meter readings (AMR) and preferably wherein said heat monitoring system (HMS) comprises an auxiliary output interface (AOI) arranged to transmit auxiliary meter readings (AMR).

5. The method according to any of the preceding claims wherein said method comprises a step of providing said re-calculated heat consumption values for monitoring of heat consumption in one or more of said plurality of heat consumption arrangements.

6. The method according to any of the preceding claims wherein said method comprises establishing estimated meter readings (EMR) corresponding to all heat submetering devices (HSD) of said non-received devices group of said plurality of heat submetering devices (HSD), preferably wherein said estimated meter readings (EMR) are established by said meter reading system (MRS).

7. The method according to any of the preceding claims wherein said one or more meter readings (MR) provided in said meter reading system (MRS) at said second acquisition time (AT2) comprise measured meter readings (MMR) and/or updated estimated meter readings (UEMR).

8. The method according to any of the preceding claims wherein said step of providing in said meter reading system (MRS) at said second acquisition time (AT2) one or more meter readings (MR), is one or more of:
performed via said acquisition system (AS) and said meter readings (MR) comprise measured meter readings (MMR);
performed by said meter reading system (MRS) and said meter readings (MR) comprise updated estimated meter readings (UEMR); and.
performed via said auxiliary input interface (AII) and said meter readings (MR) comprise auxiliary meter readings (AMR).

9. The method according to any of the preceding claims wherein said step of transmitting one or more updated meter readings (UMR) associated with a monitoring period (MP) is conditioned on an update criterion being met or on an update request.

10. The method according to any of the preceding claims wherein said measured meter readings (MMR) received in said meter reading system (MRS) are subject to validation by said meter reading system (MRS), and/or said meter readings (MR) and said updated meter readings (UMR) transmitted to said heat monitoring system (HMS) are subject to validation by said heat monitoring system (HMS).

11. The method according to any of the preceding claims wherein said meter reading system (MRS) and said heat monitoring system (HMS) are implemented in respective server computers.

12. The method according to any of the preceding claims wherein said first calculation step is calculated in said heat monitoring system (HMS).

13. A system for monitoring heat consumption in a plurality of individual heat consumption arrangements (HCA) supplied with a heating medium by a common heat supply (CHS), the system comprising:
a plurality of heat submetering devices (HSD), comprising heat cost allocator sub-meters mounted on a plurality of heat consumption devices (HCD), distributed in said plurality of individual heat consumption arrangements (HCA);
a meter reading system (MRS) communicatively coupled to said plurality of heat submetering devices (HSD);
a heat monitoring system (HMS) communicatively coupled to said meter reading system (MRS);
wherein a part of said plurality of heat submetering devices (HSD) belongs to a received devices group of said plurality of heat submetering devices (HSD) and the remaining part belongs to a non-received devices group said plurality of heat submetering devices (HSD) for a monitoring period (MP);
wherein said meter reading system (MRS) is arranged to receive one or more measured meter readings (MMR) at a first acquisition time (AT1), each of said one or more measured meter readings (MMR) corresponding to a respective heat submetering device (HSD) of said received devices group of said plurality of heat submetering devices (HSD);
wherein said meter reading system (MRS) is further arranged to transmit one or more meter readings (MR) to said heat monitoring system (HMS) at a first transmission time (TT1) later than said first acquisition time (AT1), at least one of said meter readings (MR) comprising a representation of one of said one or more received measured meter readings (MMR);
wherein said heat monitoring system (HMS) is arranged to monitor heat consumption values (HCV) corresponding to one or more of said plurality of heat consumption arrangements (HCA), said heat consumption values (HCV) being calculated in a first calculation step for said monitoring period (MP) on the basis of an energy consumption (EC) derived from said common heat supply (CHS) and meter readings (MR) corresponding to each of said plurality of heat submetering devices (HSD), said energy consumption (EC) and said meter readings (MR) being associated with said monitoring period (MP), wherein said meter readings (MR) comprise estimated meter readings (EMR) corresponding to heat submetering devices (HSD) of said non-received devices group of said plurality of heat submetering devices (HSD) and said at least one of said meter readings (MR) comprising said representation of one of said one or more measured meter readings (MMR) transmitted at said first transmission time (TT1);
wherein said system for monitoring heat consumption is arranged to provide in said meter reading system (MRS) at a second acquisition time (AT2) after said first transmission time (TT1) one or more meter readings (MR) corresponding to one or more heat submetering devices (HSD) of said non-received devices group, said meter readings (MR) being associated with said monitoring period (MP);
wherein said meter reading system (MRS) is further arranged to transmit one or more updated meter readings (UMR) to said heat monitoring system (HMS) at a second transmission time (TT2) later than said first transmission time (TT1), wherein each updated meter reading (UMR) comprises one of said one or more meter readings (MR) provided in said meter reading system (MRS) at said second acquisition time (AT2); and
wherein said heat monitoring system (HMS) is arranged to re-calculate in a second calculation step heat consumption values (HCV) corresponding to one or more of said plurality of heat consumption arrangements (HCA) for said monitoring period (MP) on the basis of said energy consumption (EC) and meter readings (MR) corresponding to each of said plurality of heat submetering devices (HSD), said meter readings (MR) being associated with said monitoring period (MP), wherein said meter readings (MR) comprise at least said meter readings (MR) transmitted at said first transmission time (TT1) and said updated meter readings (UMR) transmitted at said second transmission time (TT2).

14. The system for monitoring heat consumption according to claim 13 wherein said system for monitoring heat consumption is further arranged to carry out the method according to any of the claims 2-12.

## Patentansprüche

1. Verfahren zur Überwachung des Wärmeverbrauchs unter Verwendung einer Vielzahl von Wärme-Submetering-Geräten (HSD), die in einer Vielzahl von einzelnen Wärmeverbrauchsanordnungen (HCA) verteilt sind, die von einer gemeinsamen Wärmeversorgung (CHS) mit einem Heizmedium versorgt werden, wobei die Vielzahl von Wärme-Submetering-Geräten (HSD) Heizkostenzuweisungs-Submeter montiert an einer Vielzahl von Wärmeverbrauchsgeräten (HCD) umfasst, und kommunikativ mit einem Zählerablesungssystem (MRS) assoziiert ist, wobei das Verfahren umfasst:
Empfangen, in dem Zählerablesungssystem (MRS), einer oder mehrerer gemessener Zählerablesungen (MMR) zu einem ersten Erfassungszeitpunkt (AT1), wobei jede der einen oder mehreren gemessenen Zählerablesungen (MMR) einem jeweiligen Wärme-Submetering-Gerät (HSD) einer empfangenen Gerätegruppe der Vielzahl von Wärme-Submetering-Geräten (HSD) entspricht;
Übertragen einer oder mehrerer Zählerablesungen (MR) an ein Wärmeüberwachungssystem (HMS) zu einem ersten Übertragungszeitpunkt (TT1) später als der erste Erfassungszeitpunkt (AT1), wobei mindestens eine der Zählerablesungen (MR) eine Darstellung einer der einen oder mehreren empfangenen gemessenen Zählerablesungen (MMR) umfasst;
Überwachen, in dem Wärmeüberwachungssystem (HMS), von Wärmeverbrauchswerten (HCV), die einer oder mehreren der Vielzahl von Wärmeverbrauchsanordnungen (HCA) entsprechen, wobei die Wärmeverbrauchswerte (HCV) in einem ersten Berechnungsschritt für einen Überwachungszeitraum (MP) auf der Grundlage eines Energieverbrauchs (EC), der aus der gemeinsamen Wärmeversorgung (CHS) abgeleitet wird, und Zählerablesungen (MR), die jedem der Vielzahl von Wärme-Submetering-Geräten (HSD) entsprechen, berechnet werden, wobei der Energieverbrauch (EC) und die Zählerablesungen (MR) mit dem Überwachungszeitraum (MP) assoziiert sind, wobei die Zählerablesungen (MR) geschätzte Zählerablesungen (EMR) umfassen, die Wärme-Submetering-Geräten (HSD) einer nicht empfangenen Gerätegruppe der Vielzahl von Wärme-Submetering-Geräten (HSD) entsprechen, und die mindestens eine der Zählerablesungen (MR) die Darstellung einer der einen oder der mehreren gemessenen Zählerablesungen (MMR), die zu dem ersten Übertragungszeitpunkt (TT1) übertragen werden, umfasst;
Bereitstellen in dem Zählerablesungssystem (MRS) zu einem zweiten Erfassungszeitpunkt (AT2) nach dem ersten Übertragungszeitpunkt (TT1), einer oder mehrerer Zählerablesungen (MR), die einem oder mehreren Wärme-Submetering-Geräten (HSD) der nicht empfangenen Gerätegruppe entsprechen, wobei die Zählerablesungen (MR) mit dem Überwachungszeitraum (MP) assoziiert sind;
Übertragen einer oder mehrerer aktualisierter Zählerablesungen (LTMR) an das Wärmeüberwachungssystem (HMS) zu einem zweiten Übertragungszeitpunkt (TT2) später als der erste Übertragungszeitpunkt (TT1), wobei jede aktualisierte Zählerablesung (UMR) eine der einen oder mehreren Zählerablesungen (MR) umfasst, die in dem Zählerablesungssystem (MRS) zu dem zweiten Erfassungszeitpunkt (AT2) bereitgestellt werden; und
Neuberechnen, in dem Wärmeüberwachungssystem (HMS) in einem zweiten Berechnungsschritt, von Wärmeverbrauchswerten (HCV), die einer oder mehreren der Vielzahl von Wärmeverbrauchsanordnungen (HCA) für den Überwachungszeitraum (MP) entsprechen, auf der Grundlage des Energieverbrauchs (EC) und der Zählerablesungen (MR) entsprechend jedem der Vielzahl von Wärme-Submetering-Geräten (HSD), wobei die Zählerablesungen (MR) mit dem Überwachungszeitraum (MP) assoziiert sind, wobei die Zählerablesungen (MR) mindestens die Zählerablesungen (MR), die zu dem ersten Übertragungszeitpunkt (TT1) übertragen werden, und die aktualisierten Zählerablesungen (UMR), die zu dem zweiten Übertragungszeitpunkt (TT2) übertragen werden, umfassen.

2. Verfahren nach Anspruch 1, wobei der Energieverbrauch (EC) aus der gemeinsamen Wärmeversorgung (CHS) von einem Hauptzähler (MM) abgeleitet wird.

3. Verfahren nach einem der vorhergehenden Ansprüche, wobei die an das Wärmeüberwachungssystem (HMS) übertragenen Zählerablesungen (MR) und/oder aktualisierten Zählerablesungen (UMR) aus dem Zählerablesungssystem (MRS) übertragen werden.

4. Verfahren nach einem der vorhergehenden Ansprüche, wobei das Zählerablesungssystem (MRS) eine Hilfseingangsschnittstelle (AII) umfasst, die dafür angeordnet ist, Hilfszählerablesungen (AMR) zu empfangen, und bevorzugt, wobei das Wärmeüberwachungssystem (HMS) eine Hilfsausgangsschnittstelle (AOI) umfasst, die dafür angeordnet ist, Hilfszählerablesungen (AMR) zu übertragen.

5. Verfahren nach einem der vorhergehenden Ansprüche, wobei das Verfahren einen Schritt des Bereitstellens der neu berechneten Wärmeverbrauchswerte zur Überwachung des Wärmeverbrauchs in einer oder mehreren der Vielzahl von Wärmeverbrauchsanordnungen umfasst.

6. Verfahren nach einem der vorhergehenden Ansprüche, wobei das Verfahren das Ermitteln von geschätzten Zählerablesungen (EMR), die allen Wärme-Submetering-Geräten (HSD) der nicht empfangenen Gerätegruppe der Vielzahl von Wärme-Submetering-Geräten (HSD) entsprechen, umfasst, bevorzugt, wobei die geschätzten Zählerablesungen (EMR) von dem Zählerablesungssystem (MRS) ermittelt werden.

7. Verfahren nach einem der vorhergehenden Ansprüche, wobei die eine oder mehreren Zählerablesungen (MR), die in dem Zählerablesungssystem (MRS) zu dem zweiten Erfassungszeitpunkt (AT2) bereitgestellt werden, gemessene Zählerablesungen (MMR) und/oder aktualisierte geschätzte Zählerablesungen (UEMR) umfassen.

8. Verfahren nach einem der vorhergehenden Ansprüche, wobei der Schritt des Bereitstellens einer oder mehrerer Zählerablesungen (MR) in dem Zählerablesungssystem (MRS) zu dem zweiten Erfassungszeitpunkt (AT2) eines oder mehrere von Folgendem ist:
durchgeführt über das Erfassungssystem (AS) und die Zählerablesungen (MR) umfassen gemessene Zählerablesungen (MMR);
durchgeführt von dem Zählerablesungssystem (MRS) und die Zählerablesungen (MR) umfassen aktualisierte geschätzte Zählerablesungen (UEMR); und
durchgeführt über die Hilfseingangsschnittstelle (AII) und die Zählerablesungen (MR) umfassen Hilfszählerablesungen (AMR).

9. Verfahren nach einem der vorhergehenden Ansprüche, wobei der Schritt des Übertragens einer oder mehrerer aktualisierter Zählerablesungen (UMR), die mit einem Überwachungszeitraum (MP) assoziiert sind, von der Erfüllung eines Aktualisierungskriteriums oder von einer Aktualisierungsanforderung abhängig ist.

10. Verfahren nach einem der vorhergehenden Ansprüche, wobei die in dem Zählerablesungssystem (MRS) empfangenen gemessenen Zählerablesungen (MMR) einer Validierung durch das Zählerablesungssystem (MRS) unterliegen und/oder die Zählerablesungen (MR) und die aktualisierten Zählerablesungen (UMR), die an das Wärmeüberwachungssystem (HMS) übertragen werden, einer Validierung durch das Wärmeüberwachungssystem (HMS) unterliegen.

11. Verfahren nach einem der vorhergehenden Ansprüche, wobei das Zählerablesungssystem (MRS) und das Wärmeüberwachungssystem (HMS) in jeweiligen Servercomputern implementiert sind.

12. Verfahren nach einem der vorhergehenden Ansprüche, wobei der erste Berechnungsschritt in dem Wärmeüberwachungssystem (HMS) berechnet wird.

13. System zur Überwachung des Wärmeverbrauchs in einer Vielzahl von einzelnen Wärmeverbrauchsanordnungen (HCA), die von einer gemeinsamen Wärmeversorgung (CHS) mit einem Heizmedium versorgt werden, wobei das System umfasst:
eine Vielzahl von Wärme-Submetering-Geräten (HSD), die Heizkostenzuweisungs-Submeter montiert an einer Vielzahl von Wärmeverbrauchsgeräten (HCD) umfasst, die in der Vielzahl von einzelnen Wärmeverbrauchsanordnungen (HCA) verteilt ist;
ein Zählerablesungssystem (MRS), das kommunikativ mit der Vielzahl von Wärme-Submetering-Geräten (HSD) gekoppelt ist;
ein Wärmeüberwachungssystem (HMS), das kommunikativ mit dem Zählerablesungssystem (MRS) gekoppelt ist;
wobei ein Teil der Vielzahl von Wärme-Submetering-Geräten (HSD) zu einer empfangenen Gerätegruppe der Vielzahl von Wärme-Submetering-Geräten (HSD) gehört und der verbleibende Teil zu einer nicht empfangenen Gerätegruppe der Vielzahl von Wärme-Submetering-Geräten (HSD) für einen Überwachungszeitraum (MP) gehört;
wobei das Zählerablesungssystem (MRS) dafür angeordnet ist, eine oder mehrere gemessene Zählerablesungen (MMR) zu einem ersten Erfassungszeitpunkt (AT1) zu empfangen, wobei jede der einen oder mehreren gemessenen Zählerablesungen (MMR) einem jeweiligen Wärme-Submetering-Gerät (HSD) der empfangenen Gerätegruppe der Vielzahl von Wärme-Submetering-Geräten (HSD) entspricht;
wobei das Zählerablesungssystem (MRS) ferner dafür angeordnet ist, eine oder mehrere Zählerablesungen (MR) zu einem ersten Übertragungszeitpunkt (TT1) später als der erste Erfassungszeitpunkt (AT1) an das Wärmeüberwachungssystem (HMS) zu übertragen, wobei mindestens eine der Zählerablesungen (MR) eine Darstellung einer der einen oder mehreren empfangenen gemessenen Zählerablesungen (MMR) umfasst;
wobei das Wärmeüberwachungssystem (HMS) dafür angeordnet ist, Wärmeverbrauchswerte (HCV) zu überwachen, die einer oder mehreren der Vielzahl von Wärmeverbrauchsanordnungen (HCA) entsprechen, wobei die Wärmeverbrauchswerte (HCV) in einem ersten Berechnungsschritt für den Überwachungszeitraum (MP) auf der Grundlage eines Energieverbrauchs (EC), der aus der gemeinsamen Wärmeversorgung (CHS) abgeleitet wird, und von Zählerablesungen (MR), die jedem der Vielzahl von Wärme-Submetering-Geräten (HSD) entsprechen, berechnet werden, wobei der Energieverbrauch (EC) und die Zählerablesungen (MR) mit dem Überwachungszeitraum (MP) assoziiert sind, wobei die Zählerablesungen (MR) geschätzte Zählerablesungen (EMR) umfassen, die Wärme-Submetering-Geräten (HSD) der nicht empfangenen Gerätegruppe der Vielzahl von Wärme-Submetering-Geräten (HSD) entsprechen, und wobei die mindestens eine der Zählerablesungen (MR) die Darstellung einer der einen oder mehreren gemessenen Zählerablesungen (MMR), die zu dem ersten Übertragungszeitpunkt (TT1) übertragen werden, umfasst;
wobei das System zur Überwachung des Wärmeverbrauchs dafür angeordnet ist, in dem Zählerablesungssystem (MRS) zu einem zweiten Erfassungszeitpunkt (AT2) nach dem ersten Übertragungszeitpunkt (TT1) eine oder mehrere Zählerablesungen (MR) bereitzustellen, die einem oder mehreren Wärme-Submetering-Geräten (HSD) der nicht empfangenen Gerätegruppe entsprechen, wobei die Zählerablesungen (MR) mit dem Überwachungszeitraum (MP) assoziiert sind;
wobei das Zählerablesungssystem (MRS) ferner dafür angeordnet ist, eine oder mehrere aktualisierte Zählerablesungen (UMR) zu einem zweiten Übertragungszeitpunkt (TT2) später als der erste Übertragungszeitpunkt (TT1) an das Wärmeüberwachungssystem (HMS) zu übertragen, wobei jede aktualisierte Zählerablesung (UMR) eine der einen oder mehreren Zählerablesungen (MR) umfasst, die in dem Zählerablesungssystem (MRS) zu dem zweiten Erfassungszeitpunkt (AT2) bereitgestellt werden; und
wobei das Wärmeüberwachungssystem (HMS) dafür angeordnet ist, in einem zweiten Berechnungsschritt Wärmeverbrauchswerte (HCV) entsprechend einer oder mehreren der Vielzahl von Wärmeverbrauchsanordnungen (HCA) für den Überwachungszeitraum (MP) auf der Grundlage des Energieverbrauchs (EC) und der Zählerablesungen (MR) entsprechend jedem der Vielzahl von Wärme-Submetering-Geräten (HSD) neu zu berechnen, wobei die Zählerablesungen (MR) mit dem Überwachungszeitraum (MP) assoziiert sind, wobei die Zählerablesungen (MR) mindestens die zu dem ersten Übertragungszeitpunkt (TT1) übertragenen Zählerablesungen (MR) und die zu dem zweiten Übertragungszeitpunkt (TT2) übertragenen aktualisierten Zählerablesungen (UMR) umfassen.

14. System zur Überwachung des Wärmeverbrauchs nach Anspruch 13, wobei das System zur Überwachung des Wärmeverbrauchs ferner dafür angeordnet ist, das Verfahren nach einem der Ansprüche 2-12 auszuführen.

## Revendications

1. Procédé de surveillance de consommation de chaleur utilisant une pluralité de dispositifs de sous-comptage de chaleur (HSD) répartis dans une pluralité d'agencements de consommation de chaleur (HCA) individuels alimentés en milieu chauffant par une alimentation de chaleur commune (CHS), ladite pluralité de dispositifs de sous-comptage de chaleur (HSD) comprenant des sous-compteurs répartiteurs de dépenses de chaleur montés sur une pluralité de dispositifs de consommation de chaleur (HCD) et étant associée en communication à un système de relevé de compteur (MRS), le procédé comprenant :
la réception dans ledit système de relevé de compteur (MRS) d'un ou plusieurs relevés de compteur mesurés (MMR) à un premier temps d'acquisition (AT1), chacun desdits un ou plusieurs relevés de compteur mesurés (MMR) correspondant à un dispositif de sous-comptage de chaleur (HSD) respectif d'un groupe de dispositifs reçus de ladite pluralité de dispositifs de sous-comptage de chaleur (HSD) ;
la transmission d'un ou plusieurs relevés de compteur (MR) à un système de surveillance de chaleur (HMS) à un premier temps de transmission (TT1) postérieur audit premier temps d'acquisition (AT1), au moins un desdits relevés de compteur (MR) comprenant une représentation d'un desdits un ou plusieurs relevés de compteur mesurés (MMR) reçus ;
la surveillance dans ledit système de surveillance de chaleur (HMS) de valeurs de consommation de chaleur (HCV) correspondant à un ou plusieurs de ladite pluralité d'agencements de consommation de chaleur (HCA), lesdites valeurs de consommation de chaleur (HCV) étant calculées dans une première étape de calcul pendant une période de surveillance (MP) sur la base d'une consommation d'énergie (EC) dérivée de ladite alimentation de chaleur commune (CHS) et desdits relevés de compteur (MR) correspondant à chacun de ladite pluralité de dispositifs de sous-comptage de chaleur (HSD), ladite consommation d'énergie (EC) et ledit relevé de compteur (MR) étant associés à ladite période de surveillance (MP), dans lequel lesdits relevés de compteur (MR) comprennent des relevés de compteur estimés (EMR) correspondant à des dispositifs de sous-comptage de chaleur (HSD) d'un groupe de dispositifs non reçus de ladite pluralité de dispositifs de sous-comptage de chaleur (HSD) et ledit au moins un desdits relevés de compteur (MR) comprenant ladite représentation d'un desdits un ou plusieurs relevés de compteur mesurés (MMR) transmis audit premier temps de transmission (TT1) ;
la fourniture dans ledit système de relevé de compteur (MRS) à un second temps d'acquisition (AT2) après ledit premier temps de transmission (TT1) d'un ou plusieurs relevés de compteur (MR) correspondant à un ou plusieurs dispositifs de sous-comptage de chaleur (HSD) dudit groupe de dispositifs non reçus, lesdits relevés de compteur (MR) étant associés à ladite période de surveillance (MP) ;
la transmission d'un ou plusieurs relevés de compteur mis à jour (UMR) audit système de surveillance de chaleur (HMS) à un second temps de transmission (TT2) postérieur audit premier temps de transmission (TT1), dans lequel chaque relevé de compteur mis à jour (UMR) comprend l'un desdits un ou plusieurs relevés de compteur (MR) fournis dans ledit système de relevé de compteur (MRS) audit second temps d'acquisition (AT2) ; et
le recalcul dans ledit système de surveillance de chaleur (HMS) dans une seconde étape de calcul des valeurs de consommation de chaleur (HCV) correspondant à un ou plusieurs de ladite pluralité d'agencements de consommation de chaleur (HCA) pendant ladite période de surveillance (MP) sur la base de ladite consommation d'énergie (EC) et desdits relevés de compteur (MR) correspondant à chacun de ladite pluralité de dispositifs de sous-comptage de chaleur (HSD), lesdits relevés de compteur (MR) étant associés à ladite période de surveillance (MP), dans lequel lesdits relevés de compteur (MR) comprennent au moins lesdits relevés de compteur (MR) transmis audit premier temps de transmission (TT1) et lesdits relevés de compteur mis à jour (UMR) transmis audit second temps de transmission (TT2).

2. Procédé selon la revendication 1, dans lequel ladite consommation d'énergie (EC) est dérivée de ladite alimentation de chaleur commune (CHS) par un compteur principal (MM).

3. Procédé selon l'une quelconque des revendications précédentes, dans lequel lesdits relevés de compteur (MR) et/ou relevés de compteur mis à jour (UMR) transmis audit système de surveillance de chaleur (HMS) sont transmis depuis ledit système de relevé de compteur (MRS).

4. Procédé selon l'une quelconque des revendications précédentes, dans lequel ledit système de relevé de compteur (MRS) comprend une interface d'entrée auxiliaire (AII) agencée pour recevoir des relevés de compteur auxiliaires (AMR) et de préférence dans lequel ledit système de surveillance de chaleur (HMS) comprend une interface de sortie auxiliaire (AOI) agencée pour transmettre des relevés de compteur auxiliaires (AMR).

5. Procédé selon l'une quelconque des revendications précédentes, dans lequel ledit procédé comprend une étape de fourniture desdites valeurs de consommation de chaleur recalculées pour surveiller la consommation de chaleur dans un ou plusieurs de ladite pluralité d'agencements de consommation de chaleur.

6. Procédé selon l'une quelconque des revendications précédentes, dans lequel ledit procédé comprend l'établissement de relevés de compteur estimés (EMR) correspondant à tous les dispositifs de sous-comptage de chaleur (HSD) dudit groupe de dispositifs non reçus de ladite pluralité de dispositifs de sous-comptage de chaleur (HSD), de préférence dans lequel lesdits relevés de compteur estimés (EMR) sont établis par ledit système de relevé de compteur (MRS).

7. Procédé selon l'une quelconque des revendications précédentes, dans lequel lesdits un ou plusieurs relevés de compteur (MR) fournis dans ledit système de relevé de compteur (MRS) audit second temps d'acquisition (AT2) comprennent des relevés de compteur mesurés (MMR) et/ou des relevés de compteur estimés mis à jour (UEMR).

8. Procédé selon l'une quelconque des revendications précédentes, dans lequel ladite étape de fourniture dans ledit système de relevé de compteur (MRS) audit second temps d'acquisition (AT2) d'un ou plusieurs relevés de compteur (MR), est un ou plusieurs de :
effectuée via ledit système d'acquisition (AS) et lesdits relevés de compteur (MR) comprennent des relevés de compteur mesurés (MMR) ;
effectuée par ledit système de relevé de compteur (MRS) et lesdits relevés de compteur (MR) comprennent des relevés de compteur estimés mis à jour (UEMR) ; et
effectuée via ladite interface d'entrée auxiliaire (AII) et lesdits relevés de compteur (MR) comprennent des relevés de compteur auxiliaires (AMR).

9. Procédé selon l'une quelconque des revendications précédentes, dans lequel ladite étape de transmission d'un ou plusieurs relevés de compteur mis à jour (UMR) associés à une période de surveillance (MP) est conditionnée à la satisfaction d'un critère de mise à jour ou à une demande de mise à jour.

10. Procédé selon l'une quelconque des revendications précédentes, dans lequel lesdits relevés de compteur mesurés (MMR) reçus dans ledit système de relevé de compteur (MRS) sont soumis à validation par ledit système de relevé de compteur (MRS), et/ou lesdits relevés de compteur (MR) et lesdits relevés de compteur mis à jour (UMR) transmis audit système de surveillance de chaleur (HMS) sont soumis à validation par ledit système de surveillance de chaleur (HMS).

11. Procédé selon l'une quelconque des revendications précédentes, dans lequel ledit système de relevé de compteur (MRS) et ledit système de surveillance de chaleur (HMS) sont mis en oeuvre dans des ordinateurs serveurs respectifs.

12. Procédé selon l'une quelconque des revendications précédentes, dans lequel ladite première étape de calcul est calculée dans ledit système de surveillance de chaleur (HMS).

13. Système de surveillance de consommation de chaleur dans une pluralité d'agencements de consommation de chaleur (HCA) individuels alimentés en milieu chauffant par une alimentation de chaleur commune (CHS), le système comprenant :
une pluralité de dispositifs de sous-comptage de chaleur (HSD), comprenant des sous-compteurs répartiteurs de dépenses de chaleur montés sur une pluralité de dispositifs de consommation de chaleur (HCD) répartis dans ladite pluralité d'agencements de consommation de chaleur (HCA) individuels ;
un système de relevé de compteur (MRS) couplé en communication à ladite pluralité de dispositifs de sous-comptage de chaleur (HSD) ;
un système de surveillance de chaleur (HMS) couplé en communication audit système de relevé de compteur (MRS) ;
dans lequel une partie de ladite pluralité de dispositifs de sous-comptage de chaleur (HSD) appartient à un groupe de dispositifs reçus de ladite pluralité de dispositifs de sous-comptage de chaleur (HSD) et la partie restante appartient à un groupe de dispositifs non reçus de ladite pluralité de dispositifs de sous-comptage de chaleur (HSD) pendant une période de surveillance (MP) ;
dans lequel ledit système de relevé de compteur (MRS) est agencé pour recevoir un ou plusieurs relevés de compteur mesurés (MMR) à un premier temps d'acquisition (AT1), chacun desdits un ou plusieurs relevés de compteur mesurés (MMR) correspondant à un dispositif de sous-comptage de chaleur (HSD) respectif dudit groupe de dispositifs reçus de ladite pluralité de dispositifs de sous-comptage de chaleur (HSD) ;
dans lequel ledit système de relevé de compteur (MRS) est en outre agencé pour transmettre un ou plusieurs relevés de compteur (MR) audit système de surveillance de chaleur (HMS) à un premier temps de transmission (TT1) postérieur audit premier temps d'acquisition (AT1), au moins un desdits relevés de compteur (MR) comprenant une représentation d'un desdits un ou plusieurs relevés de compteur mesurés (MMR) reçus ;
dans lequel ledit système de surveillance de chaleur (HMS) est agencé pour surveiller les valeurs de consommation de chaleur (HCV) correspondant à un ou plusieurs de ladite pluralité d'arrangements de consommation de chaleur (HCA), lesdites valeurs de consommation de chaleur (HCV) étant calculées dans une première étape de calcul pendant ladite période de surveillance (MP) sur la base d'une consommation d'énergie (EC) dérivée de ladite alimentation de chaleur commune (CHS) et des relevés de compteur (MR) correspondant à chacun de ladite pluralité de dispositifs de sous-comptage de chaleur (HSD), ladite consommation d'énergie (EC) et lesdits relevés de compteur (MR) étant associés à ladite période de surveillance (MP), dans lequel lesdits relevés de compteur (MR) comprennent des relevés de compteur estimés (EMR) correspondant à des dispositifs de sous-comptage de chaleur (HSD) dudit groupe de dispositifs non reçus de ladite pluralité de dispositifs de sous-comptage de chaleur (HSD) et ledit au moins un desdits relevés de compteur (MR) comprenant ladite représentation d'un desdits un ou plusieurs relevés de compteur mesurés (MMR) transmis audit premier temps de transmission (TT1) ;
dans lequel ledit système de surveillance de consommation de chaleur est agencé pour fournir dans ledit système de relevé de compteur (MRS) à un second temps d'acquisition (AT2) après ledit premier temps de transmission (TT1) un ou plusieurs relevés de compteur (MR) correspondant à un ou plusieurs dispositifs de sous-comptage de chaleur (HSD) dudit groupe de dispositifs non reçus, lesdits relevés de compteur (MR) étant associés à ladite période de surveillance (MP) ;
dans lequel ledit système de relevé de compteur (MRS) est en outre agencé pour transmettre un ou plusieurs relevés de compteur mis à jour (UMR) audit système de surveillance de chaleur (HMS) à un second temps de transmission (TT2) postérieur audit premier temps de transmission (TT1), dans lequel chaque relevé de compteur mis à jour (UMR) comprend un desdits un ou plusieurs relevés de compteur (MR) fournis dans ledit système de relevé de compteur (MRS) audit second temps d'acquisition (AT2) ; et
dans lequel ledit système de surveillance de chaleur (HMS) est agencé pour recalculer dans une seconde étape de calcul les valeurs de consommation de chaleur (HCV) correspondant à un ou plusieurs de ladite pluralité d'arrangements de consommation de chaleur (HCA) pendant ladite période de surveillance (MP) sur la base de ladite consommation d'énergie (EC) et desdits relevés de compteur (MR) correspondant à chacun de ladite pluralité de dispositifs de sous-comptage de chaleur (HSD), lesdits relevés de compteur (MR) étant associés à ladite période de surveillance (MP), dans lequel lesdits relevés de compteur (MR) comprennent au moins lesdits relevés de compteur (MR) transmis audit premier temps de transmission (TT1) et lesdits relevés de compteur mis à jour (UMR) transmis audit second temps de transmission (TT2).

14. Système de surveillance de consommation de chaleur selon la revendication 13, dans lequel ledit système de surveillance de consommation de chaleur est en outre agencé pour exécuter le procédé selon l'une quelconque des revendications 2 à 12.
